# EUROPEAN PATENT SPECIFICATION

(11) **EP 0 773 248 B1**
(45) Date of publication and mention of the grant of the patent: **02.10.2002**
(21) Application number: 95117700.5
(22) Date of filing: 09.11.1995
(51) Int. Cl.: C08G 73/12, C08G 61/12, C08G 65/40, C08G 69/26, C08G 64/00, C08G 63/00

(54) **Polymers with heterocyclic side groups**
Polymere mit heterocyclischen Seitengruppen
Polymères ayant des groupements hétérocycliques latéraux

(43) Date of publication of application: 14.05.1997
(73) Proprietor: MISSISSIPPI POLYMER TECHNOLOGIES, INC., San Dimas, California 91773 (US)
(72) Inventor: Marrocco III, Matthew L., Santa Ana, California 92706 (US); Wang, Ying, Diamond Bar, California 91765 (US); Lee, Virgil J., La Verne, California 91750 (US)
(74) Representative: Grünecker, Kinkeldey, Stockmair & Schwanhäusser Anwaltssozietät

(56) References cited:
- EP-A- 0 525 878
- WO-A-93/04099
- WO-A-93/18076
- US-A- 5 227 457

## Description

### Field of the Invention

This invention relates to arylene polymers and particularly polyphenylene polymers having heterocyclic side groups, and co-polymers thereof. The polymers can be used for dielectric insulators in electrical applications, as high temperature plastics, and where a major fraction of the polymer backbone is paraphenylene as structural plastics. This invention also relates to ionic compositions comprising acids and polyphenylene polymers having heterocyclic side groups. The ionic compositions can be used for polymeric electrolytes.

### Background of the Invention

High performance composites have achieved a prominent role in the design and construction of many products, including military and commercial aircraft, sports and industrial equipment, automotive components and the like. Composites fill the need for stiffness, strength and low weight that cannot be met by other materials.

The most widely used high performance composites are fiber-polymer composites in which fibers such as oriented carbon (graphite) fibers are embedded in a suitable polymer matrix. Potential alternatives to fiber-polymer composites are molecular composites. These are materials composed of rigid-rod polymers embedded in a flexible polymer matrix. Molecular composites offer the prospect of being more economical and easier to process than conventional fiber-polymer composites.

One rigid-rod polymer produced in the past is polyphenylene. Polyphenylene is of particular interest because the basic phenylene unit has excellent thermal and chemical stability.

One method for the preparation of polyphenylenes is the oxidative coupling of aromatic compounds, such as benzene, as disclosed in P. Kovacic, et al., *Chem*. *Rev.,* **1987,** *87,* 357-379. This method involves a chemical oxidant such as cupric chloride and a Lewis acid catalyst, and in general results in insoluble polyphenylenes of uncertain structure. It is thought that polyphenylenes prepared by oxidation of benzene are branched and low in molecular weight. Polyphenylenes of better defined composition have been reported by J. K. Stille, *Die Makromolekulare Chemie*, **1972,** *154,* 49-61.

In the past, two technical difficulties limited the use of molecular composites. First, the composites were typically a blend of the rigid rod polymers and flexible polymer. Homogeneous blends, particularly with anything but a small weight fraction of the rigid rod polymer were very difficult to obtain. Second, rigid rod polymers of significant molecular weight were difficult to prepare. For example, in the preparation of polyparaphenylene, the growing phenylene chain becomes decreasingly soluble and precipitates from solution, terminating the polymerization reaction.

M. L. Marrocco, et al., in U.S. Patent No. 5,227,457 ("Marrocco, et al."), discloses substituted rigid-rod (i.e. predominately 1,4 or para linked) polyphenylenes made soluble by the attachment of flexible organic side groups. The side groups are chosen for a positive interaction with solvent, but are electrically neutral (uncharged) groups. The chemical and physical properties, including thermal stability, glass transition temperature (T_{g}), and dielectric constant (K), of substituted polyphenylenes depends on the side groups attached to the polyphenylene backbone. In the substituted polyphenylenes disclosed by Marrocco, et al., inclusion of the flexible side groups resulted in a decrease in the T_{g} of the polymer.

For many applications, particularly in the electronics industry, it would be desirable to develop polyphenylenes having higher thermal stability and higher T_{g}, while maintaining good solubility and processability and without increasing K. It would therefore be desirable to find side groups that can be appended to polyphenylenes which have high thermal stability, but which do not lower the T as much as previously disclosed side groups. It would also be desirable to find side groups which contribute to the solubility of the polymer but do not increase K. In addition, it would be desirable to find side groups which are basic and therefore protonatable and also thermally stable. This latter feature would allow the polymers to be used in ion exchange applications.

### Summary of the Invention

Polymers are provided in accordance with practice of the present invention which include repeat units comprising an aromatic nucleus substituted with one or more heterocyclic groups. The aromatic nucleus may be a phenylene nucleus, linked into the polymer backbone through the *ortho* (1,2), *meta* (1,3) or *para* (1,4) positions. The aromatic nucleus may itself be a heteroaromatic nucleus having one, two, or three of the CH groups of the ring replaced with N. With one CH group substituted with N the aromatic nucleus is a pyridine nucleus, with two N the aromatic nucleus is a pyrazine, pyrimidine, or pyridazine nucleus, with three N the aromatic nucleus is a triazine nucleus.

The heterocyclic side groups impart a number of useful properties to the polymers of the present invention. Heterocyclic groups, especially heteroaromatic groups, are extremely thermally and chemically stable. Heterocyclic groups are generally basic and will react with acids to form ionic species. Heterocyclic groups are slightly polar, allowing good interaction with solvent to help solubility, while not being so polar as to impart a high dielectric constant. Heterocyclic groups can participate in hydrogen bonding. Heterocyclic groups, especially heteroaromatic groups, can be relatively rigid resulting in a polymer having a high T_{g}.

### Detailed Description of the Invention

In one embodiment, the polymer of the present invention incorporates repeating units which have the general structure: 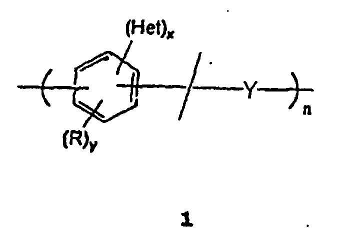 wherein one to three CH units in the aromatic rings being optionally replaced by nitrogen (N) atoms; Het is a heterocyclic group; x is 1 or 2, y is less than or equal to 4-x (if x=1 then y=0 to 3, and if x=2 then y=0 to 2); the R groups are independently alkyl, aryl, alkoxy, aryloxy, ketone (including alkyl ketone and aryl ketone), aldehyde, amide (including alkyl amide and aryl amide), amine ester (including alkyl ester and aryl ester), sulfone (including alkyl sulfone and aryl sulfone), cyano, fluoro, and oligomeric or polymeric groups including polyalkeneoxy, polyaryleneoxy, polyarylenesulfide, polyarylenesulfone, polyphenoxyphenylketone, polystyrene, polyphenylene, polyamide, and polyimide; Y is a difunctional group chosen from nil, -Ar-, -Z-, -Z-Ar-, and -Ar-Z-Ar-, where Z is a divalent group chosen from the group consisting of -O-, -S-, -NR'-, -O(CO)-, -(CO)N(CO)-, -NR'(CO)-, phthalimide, pyromellitimide, -CO-, -CH₂-, -CF₂-, and -CR'R''-; R' and R'' are alkyl or aryl, and taken together may be bridging; Ar is arylene or heteroarylene or arylene or heteroarylene substituted with one or more R groups; and n is greater than 4, preferably 10 to 100,000, more preferably 20 to 10,000, and most preferably 50 to 1,000, and represents the number average degree of polymerization. If Y is nil, n typically will not exceed 500.

In the formula above, the slash (/) indicates a generic co-polymer which may be a block co-polymer or a random co-polymer.

Preferred embodiments are defined below:

The polymer of claim 1 wherein Y is nil and greater than 50% of the heterocyclic substituted arylene repeat units are 1,4 catenated.

The polymer of claim 1 wherein at least 50% of the heterocyclic substituted arylene units are 1,4 catented and Y is substantially nil, x is 1 and y is 0.

The polymer of claim 1 wherein the repeat units Y ,form a block selected from the group consisting of -phenylene-CONH-phenylene-NHCO)ₘ-phenylene, -(phenylene-CONH)ₘ-phenylene-, -(phenylene-COO-phenylene-OCO)ₘ-phenylene-, -(phenylene-carbonyl)ₘ-phenylene-, and -(phenylene-carbonate-phenylene-2,2-isopropyl-idene-carbonate)ₘ-phenylene-.

The process of claim 31 wherein l is between 2 and 200.

The process of claim 31 wherein l is between 1 and 10 and m is between 1 and 10.

The polymer of claim 39 wherein r is at least 10.

The polymer of claim 39 wherein r is at least 20.

The polymer of claim 39 wherein the polymer comprises the repeat units:

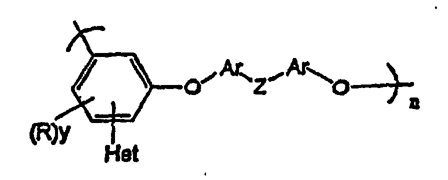

The polymer of claim 39 wherein the polymer comprises the repeat units:

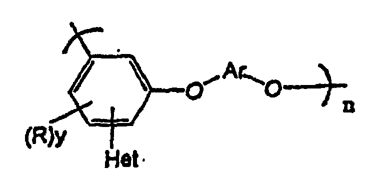

The polymer of claim 46 wherein at least 50% of the heterocyclic substituted arylene units are 1,4 catenated.

The process of claim 58 wherein l is 1.

The process of claim 58 wherein l is between 2 and 200.

The process of claim 58 wherein l is between 1 and 10 and m is between 1 and 10.

Heterocyclic groups may be single ring, fused ring, or multiple ring groups, preferably comprising at least one hetero atom selected from boron, nitrogen, oxygen, sulfur, and phosphorous, and containing only H, B, C, N, O, P and S.

Heterocyclic groups which can be used in the practice of this invention include, but are not limited to benzimidazolyl, benzofuranyl, benzoxazolyl, benzthiazolyl, dioxolanyl, dithianyl, furanyl, imidazolyl, indolyl, isoquinolinyl, maleimidyl, morpholinyl, oxadiazolyl, oxazolyl, phthalimidyl, piperidinyl, purinyl, pyranyl, pyrazinyl, pyridazinyl, pyridyl, pyrimidinyl, quinazolinyl, quinazolonyl, quinolinyl, quinolonyl, quinoxalinyl, succinimidyl, tetrahydrofuryl, thiophenyl, triazinyl, and the like.

Preferred heterocyclic groups are 2-pyridyl, 3-pyridyl, 4-pyridyl, 2-pyrimidinyl, 4-pyrimidinyl, 2-pyrazinyl, 1,3,5-triazin-2-yl, 2,4-di-phenyl-1,3,5-triazin-2-yl, 2-quinolyl, 4-quinolyl, 2-quinoxalyl, 2-quinazolyl, 1-isoquinolyl, 4-isoquinolyl, 2-[(1H]4-quinazolonyl], 4-[1H]2-quina-zolonyl, 2-indolyl, benzo[b]thiophen-2-yl, benzo[b]furan-2-yl, 2-benzoxazolyl, 4-benzoxazolyl, 5-benzoxazolyl, 5-phenyl-2-oxazolyl, 4,5-dimethyl-2-oxazolyl, 2-benzthiazolyl, 4-benzthiazolyl, 5-benzthiazolyl, 2-benzimidazolyl, 2-thiophenyl, 3-thiophenyl, 2-imidazolyl, 2-quinolone-4-yl, 4-quinolone-2-yl, 3-methylpyridin-2-yl, and 4-phenylquinolin-2-yl, 1-succinimidyl, 3-succinimidyl, 1-phthalimidyl, 1-phenyl-3-phthlimidyl, 1-maleimidyl, 1-nadimidyl, 2-dioxolanyl, and 2-dithianyl.

The above examples are meant to be exemplary of the many possible heterocyclic side groups useful in the practice of the present invention. As will be apparent to those of ordinary skill in the art, the above mentioned heterocyclic groups may be attached to the polymer main chain at any position on the ring. For example, while 2-quinolyl and 4-quinolyl are mentioned in the above list 3-quinolyl, 5-quinolyl, 6-quinolyl, 7-quinolyl, and 8-quinolyl are also contemplated for use in the present invention. The heterocyclic groups may also be further substituted with R at any available position. Although particular heterocyclic ring systems are listed above, this does not limit in any way the various heterocyclic ring systems useful in practice of the present invention.

Examples of alkyl groups which can be used in the practice of this invention include, but are not limited to, methyl, ethyl, propyl, n-butyl, t-butyl, dodecanyl, trifluoromethyl, perfluoro-n-butyl, 2,2,2-benzyl, 2-phenosxyethyl land the like.

Examples of aryl groups which can be used in the practice of this invention include, but are not limited to, phenyl, 2-tolyl, 3-tolyl, 4-tolyl, naphthyl, biphenyl, 4-phenoxyphenyl, 4-fluorophenyl, 3-carbomethoxyphenyl, 4-carbomethoxyphenyl and the like.

Examples of alkoxy groups which can be used in the practice of this invention include, but are not limited to, methoxy, ethoxy, 2-methoxyethoxy, t-butoxy and the like.

Examples of aryloxy groups which can be used in the practice of this invention include, but are not limited to, phenoxy, naphthoxy, phenylphenoxy, 4-methylphenoxy and the like.

Examples of alkyl ketone groups which can be used in the practice of this invention include, but are not limited to, acetyl, propionyl, t-butylcarbonyl, 2-ethylhexylcarbonyl and the like.

Examples of aryl ketone groups which can be used in the practice of this invention include, but are not limited to, phenylcarbonyl (benzoyl), phenoxyphenylcarbonyl, 1-naphthylcarbonyl, 2-naphthylcarbonyl, nicotinoyl, isonicotinoyl, 4-methylphenylcarbonyl, 2-fluorophenylcarbonyl, 3-fluorophenylcarbonyl, 4-fluorophenylcarbonyl, and the like.

Examples of amide groups which can be used in the practice of this invention include, but are not limited to, N,N-dimethylaminocarbonyl, N-butylaminocarbonyl, N-acetylamino, N-acetylmethylamino, N-phenyl-amino-carbonyl, N,N-diphenylaminocarbonyl, N-phenyl-N-methyl-aminocarbonyl, N-benzoylamino, N-benzoylmethylamino, and the like.

Examples of ester groups which can be used in the practice of this invention include, but are not limited to, methoxycarbonyl, benzoyloxycarbonyl, phenoxycarbonyl, naphthyloxycarbonyl, ethylcarboxy, phenylcarboxy, 4-fluorophenylcarboxy, 2-ethylphenylcarboxy, and the like.

Examples of alky sulfone groups which can be used in the practice of this invention include, but are not limited to, methylsulfonyl, ethylsulfonyl and the like.

Examples of aryl sulfone groups which can be used in the practice of this invention include, but are not limited to, phenylsulfonyl, tolylsulfonyl and the like.

The above examples are meant to be exemplary of the many possible R groups useful in the practice of the present invention. As will be apparent to those of ordinary skill in the art, the above mentioned R groups may be attached to the polymer chain at any position on the ring.

Examples of Ar which can be used in the practice of this invention include, but are not limited to, phenylene (1,2-, 1,3-, and 1,4-), 4-benzoyl-1,3-phenylene, 5-benzoyl-1,3-phenylene, 2-benzoyl-1,4-phenylene, 2-phenyl-1,4-phenylene, 1,4-naphthalenediyl, 2,4-toluenediyl, 2,5-xylenediyl, 4-carboxymethyl-1,3-phenylene, 2-carboxymethyl-1,4-phenylene, 5-carboxymethyl-1,3-phenylene, 4,4'-biphenyldiyl, 3,5-pyridinediyl, 2,6-pyridinediyl,2,4-pyridin-ediyl, 5-amino-1,3-phenylene, 4,7-quinolinediyl, 2,6-purine, 3,6-pyridazine, 2,5-thiophenediyl, and the like. Any other positional isomers of the above arylene groups not specifically listed above may be Ar, e.g. 2,4-quinolinediyl, 2,5-quinolinediyl, 2,6-quinolinediyl, and the like. One skilled in the art will be able to recognize other Ar nuclei suitable for use in the present invention.

Where Y is Ar, the Ar repeat unit may be derived from the corresponding dihalo, disulfonato, or halosulfonato monomer. For example, 1,3-phenylene from 1,3-dichlorobenzene, 2-benzoyl-1,4-phenylene from 2,5-dichlorobenzophenone or 5-chloro-2-sulfonoxy-methyl-benzophenone, and 4,7-quinolinediyl from 4,7-dichloroquinoline.

Where Y is amide, ester, imide and the like, the repeat unit may be derived from a diacid, or a dianhydride, which condenses with a diamine, or diol.

Preferred examples of ester and amide type Y are: - (phenylene-CONH-phenylene-NHCO)-phenylene,-(phenylene-CONH-phenylene)-,-(phenylene-COO-phenylene-OCO)-phenylene-,-(phenylene-carbonyl)-phenylene-, -(phenylene-carbonyl-phenylene-oxo-phenylene-carbonyl-phenylene)- and the like.

Where the polymer of the present invention is a block co-polymer the repeat units Y form oligomeric or polymeric segments non-limiting examples of which are polyamide, polyarylate, polyaryleneoxide, polycarbonate, polydimethyl-siloxane, polyester, polyetherketone, polyphenylene, substituted polyphenylene, polyphenylenesulfide, polystyrene, and the like.

Polyaryleneoxide is meant here to be a generic name for polymers of the type (-Ar-O-)ₙ. Polyaryleneoxides include, but are not limited to, poly(2,6-di-methyl-1,4-phenyleneoxide), poly(2,6-diphenyl-1,4-phenyleneoxide), poly(oxy-2,3,5,6-tetrafluorophenylene), and poly(oxy-2,6-pyridinediyl). Polyetherketone is meant here to be generic for the various polymers comprised of phenylene, oxo, and carbonyl repeat units, including but not limited to poly(oxy-1,4-phenylene-oxy-1,4-phenylene-carbonyl-1,4-phenylene), also known as PEEK for polyether ether ketone, and the related polymers PEK, PEKK, and the like. Polyarylate is meant here to be a generic name for the various polymers formed from terephthalic acid or isophthalic acid and diols such as bis-phenol A (2,2'-isopropylidenediphenol), resorcinol, hydroquinone, 4,4'-dihyroxybipyhenyl and the like. The above generic names will be known to those skilled in the art.

Polyamide includes but is not limited to polymers formed from the formal condensation of diamines such as 1,4-butane diamine, 1,6-hexane diamine, 4,4'-methylenedianiline, 1,3-phenylenediamine, 1,4-phenylenediamine, and the like, with diacids such as adipic acid, isophthalic acid, terephthalic acid, succinic acid, and the like.

Polyester includes, but is not limited to polymer formed by the formal condensation of diols such as ethylene glycol 1,6-hexane glycol, hydroquinone, propylene glycol, resorcinol, and the like, with diacids such as adipic acid, isophthalic acid, terephthalic acid, succinic acid, and the like.

Where Y is nil, the polymers of the present invention have the general structure **2**. 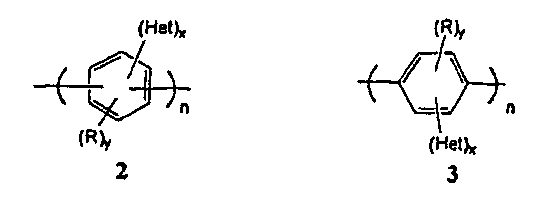 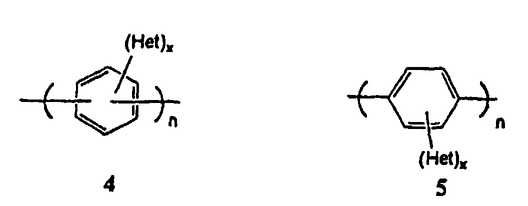 Where Y is nil and substantially all of the monomer units are *para* or 1,4, the polymers have general structure **3**. General structures **4** and **5** show the case wherein Y is nil and there are no side groups except the heterocyclic groups, and in **5** where substantially all of the repeat units are 1,4 catenated. For structures **2-5** Het, R, n, x, and y are as defined above.

The polymers of the present invention as shown in structure **1** may be random, alternating, block, or of other repeat sequence. The (Het)ₓ and (R)_{y} groups of repeat units may be chosen independently leading to co-polymers of the type: 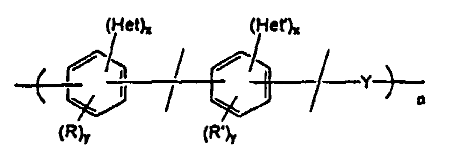 and 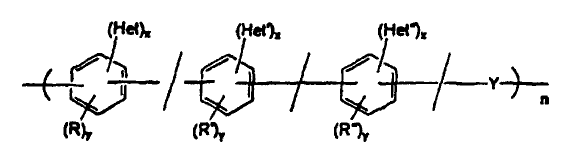 and so forth. More than one Y may also be present to give co-polymers.

Denoting the general heterocyclic substituted arylene unit of structure **2** by H, general structure **1** may be represented by -(H-/-Y-)-. Non-limiting examples of co-polymers are then -(H-/-H'-/-Y)-, -(H-/-H'-/-H''-/Y)-, -(H-/-Y-/-Y')-, and the like.

Where specific monomer ratios of phenylene and Y are provided they are indicated in the structural drawing as mol per cents above and below the slash separating the monomer units.

The general structure below indicates a molar ratio of phenylene to Y of 80 to 20, and as above the sequence (random, block, etc.) is not implied.

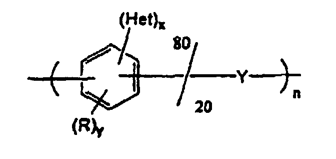

The specific structure below shows a random co-polymer of benzoxazole appended 1,4-phenylene (85 mol % of the repeat units) and 1,3-phenylene (15 mol % of the repeat units).

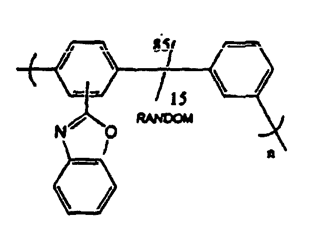

Additional specific structures below are non-limiting examples of polymers of the present invention.

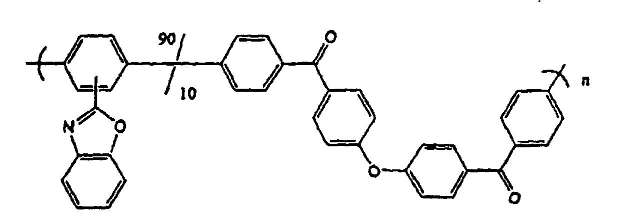

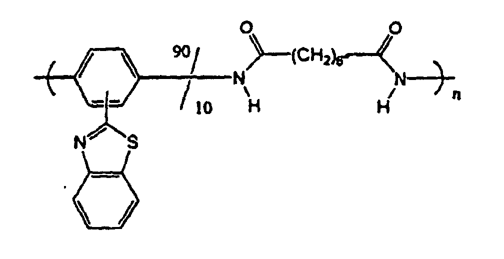

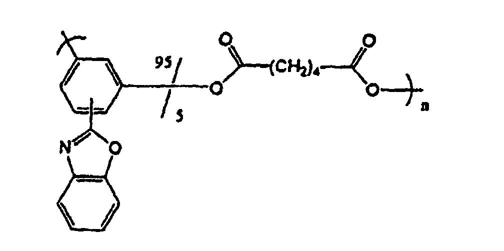

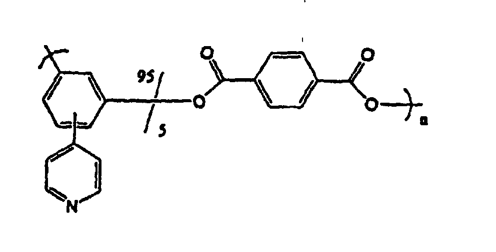

A specific structure illustrating an alternating polymer of the present invention is:

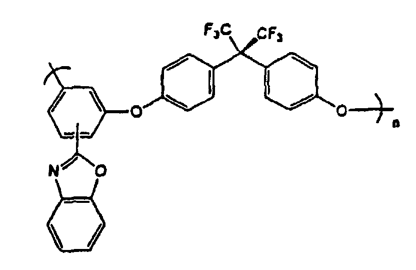

A specific structure illustrating a block co-polymer of the present invention is:

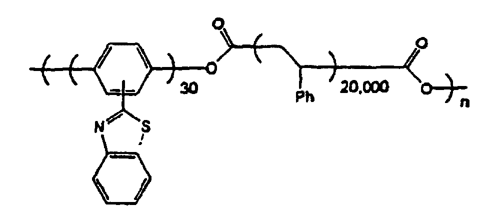

The general structural formula of a block co-polymer of the present invention is -((H)ₗ(Y)ₘ)ₙ-, where l and m are 1 or greater and represent the number average degree of polymerization of the block or segment. The general structural formula of an alternating polymer of the present invention is -(H-Y)ₙ-. These structural types are illustrative and not meant to be limiting in any way.

The polymers of the present invention may have end groups derived from the monomers, or from specific end cappers added during the polymerization reaction. The end groups may also be further modified by chemical transformation, such as removal of a protecting group, or reaction in a post-polymerization step. The end groups may be used to form block co-polymers with other monomers or polymers, or as crosslinking groups in a curing process.

The polymers of the present invention may be prepared from monomers selected from the following group: 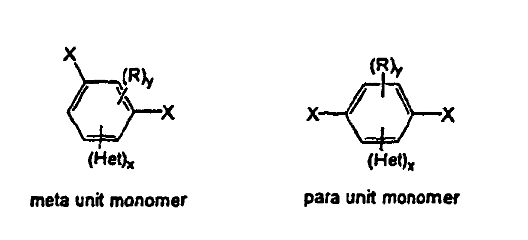 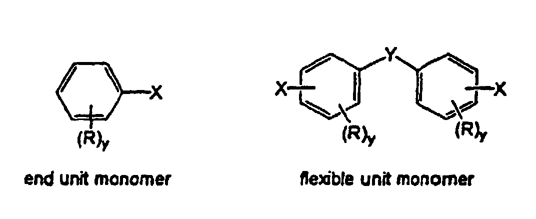 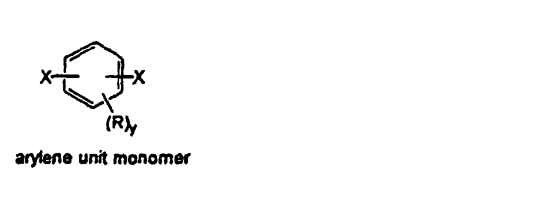 where X is chloro, bromo, iodo, or a sulfonate, preferably chloro.

Non-limiting examples of sulonates are methane sulfonate, phenyl sulfonate, toluene sulfonate, trifluoromethane sulfonate, and fluorosulfonate.

Many heterocycle substituted dihalophenylenes that are useful as monomers in practice of the present invention are known compounds. 2-(2,4-dichlorophenyl)-3,5-dimethylpyridine [71523-00-7], 2-(3,5-dichlorophenyl)-3,5-dimethylpyridine [71523-01-8], 4-(2,4-dichlorophenyl)-3,5-dimethylpyridine [71523-07-4], 6-(3,5-dichloro-phenyl)-3(2H)-pyridazinone [66710-61-0], 5-(2,4-dichlorophenyl)-2,4-dihydro-(3H)-pyrazol-3-one [63554-73-4], 1-(2,5-dichlorophenyl)-1,2-dihydro-5-methyl-(3H)-pyrazolone [14575-32-7], 3-[69277-30-1], and (2,4-dichlorophenyl) furan. Heterocycle substituted dihalobenzenes may be commercially available, such as 1-(3,5-dichloro)-2,5-dimethylpyrrole.

Heterocycle substituted dihalophenylene monomers may be prepared, for example, from commercially available 2,4-dichlorophenylacetic acid, or 2,4-dichlorophenyl acetonitrile, by reaction under Vilsmeier-Haack conditions (for example following Z. Arnold, *Coll*. *Czech. Chem*. *Comm.*, **1961**, *26*, 3051-3057) to form the 2-(2,4-dichlorophenyl)-malondialdehyde equivalent. The malondialdehyde group (or its chemical equivalent) may then be transformed into various heterocycles including but not limited to pyranones, isoxazoles, pyrazoles, pyrimidines, pyrimidones, and pyridones, using methods well known in the art.

Heterocyclic substituted dihalophenylene monomers may also be prepared by Gomberg-Bachman coupling of arenediazonium salts and a heterocycle (see J. B. Beadle, S.H. Korzeniowski, D. E. Rosenberg, B. J. Garcia-Slanga, and G. W. Gokel, *J. Org. Chem.,* **1984,** *49*, 1594-1603). Non-limiting examples of arenediazonim salts are 2,4-dichlorobenzenediazonium tetrafluoroborate, 2,5-dichlorobenzenediazonium hexafluorophosphate, and the like. Non-limiting examples of heterocycles are pyridine, quinoline, thiophene, and the like.

Other methods of producing heterocycle substituted monomers useful in the practice of the present invention are given in the Examples below.

The above monomers may be polymerized to form the polymers of the present invention by reductive coupling using nickel (0) compounds as described by T. Kanbara, T. Kushida, N, Saito, I. Kuwajima, K. Kubota, and T. Yamamoto, *Chemistry Letters*, **1992,** 583-586, or nickel catalyzed reductive coupling as described in '457 or US 5,241,044.

The heterocyclic groups of the polymers of the present invention may be present in the monomers used to prepare the polymers as in the heterocyclic substituted dihalophenylene monomers mentioned above, or the heterocyclic groups may be formed after polymerization by chemical transformation of a suitable precursor group. For example, an aldehyde or ketone side group may be transformed into a cyclic acetal or cyclic ketal respectively. Carboxylic acid or ester side groups may be transformed into oxazole, pyrimidine, thiazole, and other 1,3 heteroatom groups. Ketomethylene groups may be condensed with aromatic o-aminoketones to form quinoline groups. Other transformations will be apparent to those skilled in the art.

The polymers of the present invention may also be prepared by the reaction of dimeric, oligomeric, or polymeric compounds having the formula: 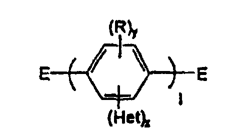 with a complementary difunctional monomer, oligomer, or polymer having the formula: 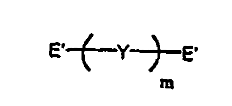 where E and E' are complementary reactive groups. For example, E and E' may be chosen from the same row in Table 1.

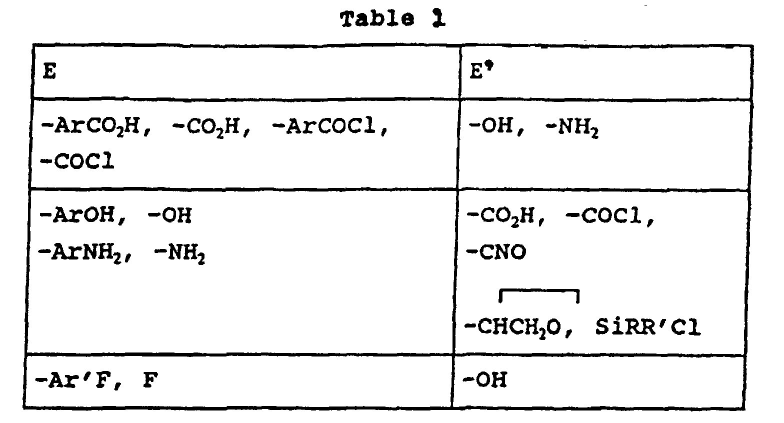

Thus, if E is -ArCO₂H and E' is -OH the polymer will be a polyester.

The following reactions illustrate three particular polymers of the present invention and their method of preparation. The first where the heterocycle substituted dimer monomer is derived from the acid catalyzed condensation of 2-chloro-4-fluorobenzoic acid and 2-aminophenol to give 2-(2-chloro-4-fluorophenyl)-benzoxazole which is then reductively coupled with Zn using NiCl₂(PPh₃)₂ as catalyst.

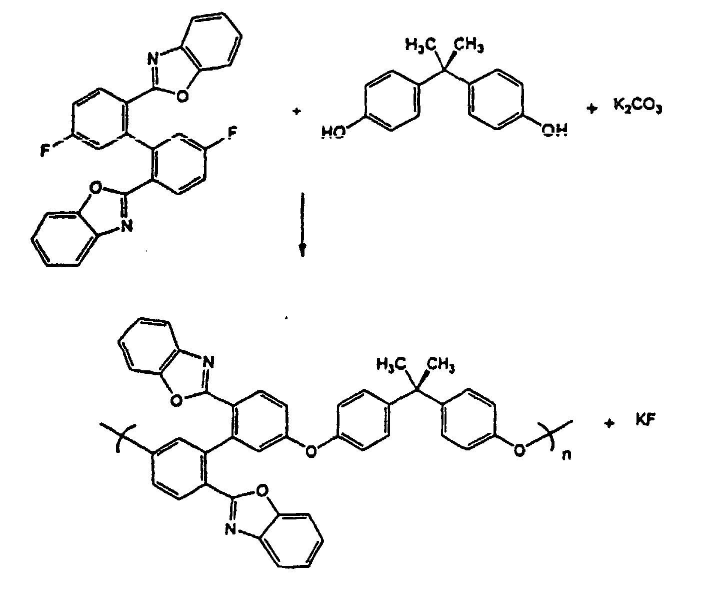

The second example illustrates the case wherein the oligomeric monomer is derived from the nickel catalyzed reductive coupling of 2,5-dichlorobenzaldehyde ethyleneglycol acetal and 3-chloroaniline as endcapper; and the polymer is formed by condensation of the oligomeric diamine with isophthaloyl chloride to give a segmented polymer bearing heterocyclic side groups.

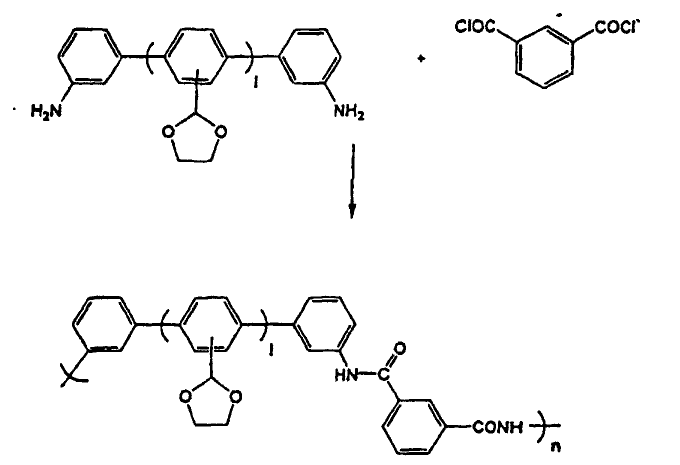

A third example illustrates the case wherein a oligomeric or polymeric segment bearing pendent heterocyclic groups is allowed to react with isophthaloyl chloride and *meta*-phenylene diamine to form a block co-polymer.

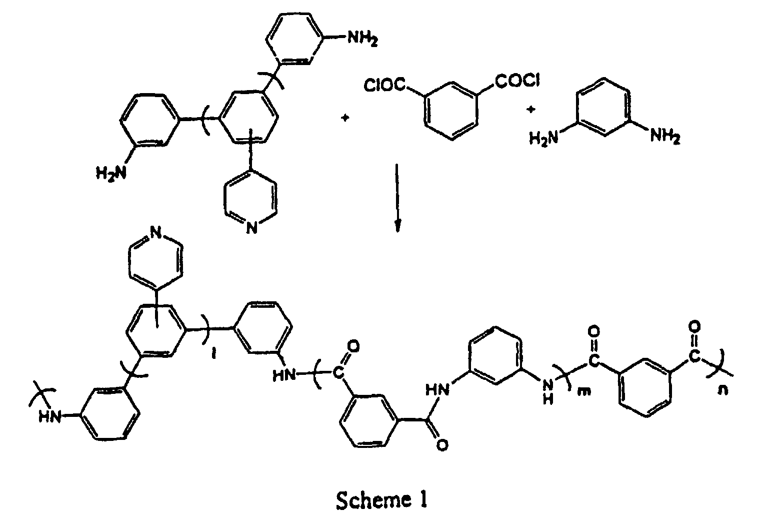

Where -((H)ₗ(Y)ₘ)ₙ- is prepared from E-(H)ₗ-E and E -Y-E' there may be additional linking groups derived from E and E' or there may be an additional fractional part of the repeat unit Y. These are considered to be part of the (Y)ₘ block in the formula -((H)ₗ(Y)ₘ)ₙ-. For example, in Scheme 1 above there is an additional isophthaloyl unit (a part of the Y repeat unit) and two additional amino-1,3-phenylene units (derived from the E groups). The product polymer of Scheme 1 is considered to have Y equal to poly(isophthalamido-1,3-phenylene). Other E and E' will be apparent to those skilled in the art. The general requirements are that E not interfere with the formation of the reactive oligomer E-(H)-E, and that E and E' are suitably reactive. The usual protective groups may be used in the preparation of E-(H)-E.

Where E is F, the heterocyclic side group must be electron withdrawing enough to activate F toward nucleophilic displacement, and the heterocyclic side group must be *ortho* or *para* to F. Where E is -Ar'F, Ar' is an arylene group that has an electron withdrawing group *ortho* or *para* to F. Non-limiting examples of -Ar'F are 4-(4'-fluorobenzophenone) and 5-(2-fluorobenzophenone).

Even using nominally pure monomer one may expect a small fraction of the repeat units to differ from the norm. For example, a polymer wherein a small fraction of the heterocyclic side groups are missing may be formed. A repeat unit without a Het side group is a Y repeat unit. Thus where Y is intended to be nil there may still be a small fraction of adventitious Y repeat units.

If the ratio of repeat units is not given explicitly, a range of 99.9/0.1 to 1/99 is assumed. About 0.1 mol per cent Y can have an observable effect on polymer properties, for example, altering melt flow or T_{g}, both of which are of practical importance. As little as 0.1 mol per cent heterocyclic arylene repeat unit will significantly affect the overall polymer properties. However, for many practical applications it will be desirable to have more than 0.1%, and preferably about 1% or more heterocyclic arylene repeat unit. For example, a polymer with 1% of the repeat units appended with heterocyclic groups will behave very differently towards acid than a polymer with no heterocyclic groups, and will have a very different ionic conductivity. Although polymer properties are more closely related to weight per cent Y than mol per cent Y, the limits of 0.1 mol per cent and 99 mol per cent are convenient and sufficient for the purposes of the present invention.

The heterocyclic side groups of the polymers of the present invention serve to increase the solubility of the polyarylene backbone. Unsubstituted polyarylenes, including poly(1,4-phenylene), poly(1,3-phenylene), and poly(1,4-phenylene-co-1,3-phenylene) are all highly insoluble in common organic solvents, with solubility dropping rapidly with increasing MW. Only very low MW unsubstituted polyarylenes can be prepared, because the growing polymers precipitate out of solution, and once precipitated can no longer grow.

Side groups increase solubility by increasing the entropy of the polymer chain, that is by allowing additional possible conformations in solution. The more flexible the side group the more it will contribute to the polymer solubility. Flexible side groups, however, also lower the T_{g}, lower the modulus, and increase the coefficient of thermal expansion (CTE) of the polymer, and therefore are undesirable in many applications such as printed wiring boards and composite aircraft wing structures where high T_{g}; high modulus, and low CTE are required. Heterocyclic side groups will vary in flexibility, and the least flexible heterocyclic side is preferred. In general, heteroaromatic groups are the least flexible heterocyclic groups.

Polymers having side groups which are placed randomly along the polymer chain will have higher solubility than polymers with side groups regularly placed along the chain. Therefore random co-polymers with different side groups and homopolymers with random regiochemistry (i.e. not all head-to-head or head-to-tail) will be more soluble than for example head-to-head homopolymers. The heterocyclic side groups of the present invention are preferably randomly or partly randomly distributed among the possible positions on the polymer backbone.

Polyarylenes are insoluble partly because they pack very well in the solid state. Heterocyclic side groups that disrupt packing of the polymer will increase solubility. Heterocyclic side groups are preferably placed *ortho* to the site of catenation. Groups *ortho* to the site of catenation have a large steric repulsion for the adjacent monomer unit. This steric repulsion causes a twisting of the adjacent repeat units out of a common plane, thereby reducing the efficiency of packing in the solid state and increasing solubility. If adjacent repeat units both have heterocyclic side groups in the *ortho* positions (e.g. heterocyclic groups in the 2 and 2' positions relative to the bond joining the repeat units) the steric repulsion and the twist angle will be very large, and solubility will be increased correspondingly. It is desirable that the polymers of the present invention have heterocyclic groups *ortho* to the site of catenation. Although the polymers of the present invention need not have any ortho heterocyclic side groups, solubility will be improved if 5% or more of the repeat units will have *ortho* heterocyclic groups, more preferably at least 10% of the repeat units will have *ortho* heterocyclic groups, even more preferably at least 25% of the repeat units will have *ortho* heterocyclic groups, and most preferably at least 50% of the repeat units will have *ortho* heterocyclic groups.

Side groups that have polarity similar to the solvent polarity typically increase the polymer solubility. side groups that have very different polarity than the solvent may actually decrease solubility. Heterocycles are typically of moderate to high polarity and therefore the polymers of the present invention are most soluble in moderate to highly polar solvents. Solvents useful for dissolving polyarylenes with heterocyclic side groups include but are not limited to anisole, cresol, N-cyclohexylpyrrolidone, dichlorobenzene, dimethylsulfoxide, N,N-dimethylacetamide, N,N-dimethylformamide, formamide, N-methylacetamide, methylbenzoate, N-methylpyrrolidone, phenol, tetramethylurea, and the like.

Heterocyclic groups are basic and may be protonated by Bronsted acids and may form complexes with Lewis acids. The relative pKₐs of the acid and the heterocyclic group will determine the extent of protonation. If the acid has a pKₐ about two units lower (more acidic) than the conjugate acid of the heterocyclic group and is present in roughly equal molar amount essentially 99% of the heterocyclic groups will be protonated. Preferably the pKₐ of the Bronsted acid will be no more than 2 units greater than the conjugate acid of the heterocyclic side group, more preferably no more than 1 unit greater, and most preferably no greater than the conjugate acid of the heterocyclic side group. One skilled in the art will be able to identify those acids which will protonate or complex a given heterocyclic side group, and to calculate or measure the degree of protonation or association.

Once protonated or complexed a heterocyclic side group is much more polar and therefore increases the solubility of the polymer in highly polar solvents. Polyarylenes with a substantial fraction of protonated heterocyclic side groups will be soluble in highly polar solvents including but not limited to ethanol, methanol, and water.

Protonated polyarylenes with heterocyclic side groups are proton exchange resins, and are useful as proton exchange membranes for fuel cells and batteries, as ion exchange membranes for deionizing salt solutions, as proton transport membranes, and as solid acid catalysts.

Polyarylenes with heterocyclic side groups useful for protonation or complexation with Lewis acid to form ionic polymers will have heterocyclic groups with pKₐs of from -1 to 12, preferably from 1 to 8, and most preferably from 2 to 7. For use in non-aqueous environment pKₐs of less than -1 may be useful. Polymers with heterocyclic side groups having pKₐs higher than 12 may be useful as anion exchange resins.

Non-limiting examples of Bronsted acids useful in the practice of the present invention are acetic acid, formic acid, hydrobromic acid, hydrofluoric acid, hydrochloric acid, hydriodic acid, methanesulfonic acid, trifluoromethanesulfonic acid, tosic acid, nitric acid, percholoric acid, phosphoric acid, polyphosphoric acid, sulfuric acid, sulfurous acid, trifluoroacetic acid, and the like.

Examples of Lewis acids useful in the practice of the present invention include, but are not limited to, aluminum tribromide, aluminum trichloride, boron tribromide, boron trichloride, boron trifluoride, cupric chloride, ferric chloride, gallium trichloride, tantalum pentafluoride, titanium tetrachloride, titanium tetrafluoride, zinc chloride, and the like.

The invention is further described below in several exemplary embodiments. The choices and amounts of reagents, temperatures, reaction times, are illustrative but are not considered limiting in any way. Other approaches are contemplated by, and within the scope, of the present invention.

### EXAMPLE 1

### Preparation of 2-(2,5-Dichlorophenyl)benzothiazole

2,5-Dichlorobenzoic acid (18.3 g, 95.8 mmol) was mixed with aminothiophenol (13 g, 104 mmol) and 500 g polyphosphoric acid. The mixture was stirred at 60°C for 2 hours and 110°C overnight. The solution turned green. The temperature was raised gradually to 165°C. The mixture was kept at this temperature for 24 hours and poured onto ice. The solid was filtered and washed with 100 ml of 5% aqueous sodium bicarbonate. The solid material was then extracted with hot cyclohexane (500 ml). The cyclohexane solution was filtered through log of silica gel and concentrated. The monomer was collected from the concentrated solution as white crystals and dried under vacuum, (18 g, m.p. 123-125°C).

### EXAMPLE 2

### Preparation of 2-(2,5-Dichlorophenyl)benzoxazole

2,5-Dichlorobenzoic acid (800 g, 4.2 mol), 2-aminophenol (415 g, 3.8 mol) and polyphosphoric acid (1600 g) were placed in a flask and heated at 180-190°C for 2 days. The viscous dark solution was poured onto ice while hot. The solid was collected by filtration and washed with water thoroughly. The solid cake was transferred into a large beaker and stirred with 2 liters of saturated aqueous sodium bicarbonate for 16 hours. The brownish suspension was filtered and washed with water and dried at 80°C overnight to give 1 kg of crude product. The crude product was purified by recrystallization from cyclohexane twice to give 474 g of monomer as white crystals.

### EXAMPLE 3

### Preparation of 2,2'-[1,4-(2,5-Dichlorophenylene)]-bisbenzoxazole

The monomer 2,2'-[1,4-(2,5-Dichlorophenylene)]-bisbenzoxazole is prepared by condensation of 2,5-dichloroterephthalic acid and 2-aminophenol using the method given above in Example 2 for 2-(2,5-dichloro-phenyl)benzoxazole.

### EXAMPLE 4

### Preparation of 2-(2,5-Dichlorophenyl)-4-phenylquinoline

2-Aminobenzophenone (33 g) and 2,5-dichloroacetophenone (32 g) were placed in a flask together with 2.5 g of toluenesulfonic acid monohydrate. The mixture was heated and stirred at 160-170°C for 24 hours. The resulting mixture was diluted with ethanol (300 ml). The crystals was filtered to give 63 g crude product, which was treated with charcoal and recrystallized first from ethanol, followed by recrystallization from hexane and ethyl acetate to give monomer as white crystals (65%).

### EXAMPLE 5

### Preparation of 3-(2,5-Dichlorophenyl)-pyridine

A 50 ml two-necked round-bottom flask is charged with 2-iodo-1,4-dichlorobenzene (5.44 g), tetrakis(triphenyl-phosphine)palladium (3 mol %, Aldrich), benzene (40 ml), and aqueous sodium carbonate solution (20 ml of 2 M solution). To this vigorously stirred mixture is added 3-pyridylboronic acid (2.71 g) dissolved in a minimum amount of 95% ethanol. The reaction mixture is heated to 90-95°C and refluxed for 9 hours under vigorous stirring. The reaction mixture is then cooled to room temperature and the excess boronic acid is oxidized by 30% hydrogen peroxide (0.25 ml) for 1 hour. The mixture is extracted with ether, washed with saturated sodium chloride solution, and dried over anhydrous sodium sulfate. The solvent is removed, and the crude product is purified by chromatography on Florisil eluting with pentane/dichloromethane (90/10) to give monomer.

### EXAMPLES 6-9

Using the method of Example 5 above for preparing 3-(2,5-dichlorophenyl)-pyridine, the following monomers are made from 2-iodo-1,4-dichlorobenzene and the listed heteroarylboronic acid prepared according to literature methods (Terashima, M., et al., Chem Pharm. Bull, 1983, *31*, 4573; Fisher, F.C., et al., Recl. Trav. Chim. Pay-Bas, 1974, *93*, 21):

**TABLE 2**

| | starting boronic acid | monomer |
|---|---|---|
| Example 6 | 4 pyridine-boronic acid | 4-(2,5-Dichlorophenyl)-pyridine |
| Example 7 | 2-pyridine-boronic acid | 2-(2,5-Dichlorophenyl)-pyridine |
| Example 8 | 4-quinoline-boronic acid | 4-(2,5-Dichlorophenyl)-quinoline |
| Example 9 | 3-furanboronic acid | 3-(2,5-Dichlorophenyl)-furan |

### EXAMPLE 10

### Polymerization of 2-(2,5-Dichlorophenyl)benzothiazole

Activated zinc dust is obtained after 2 washings of commercially available 325 mesh zinc dust with 1 M hydrogen chloride in diethyl ether (anhydrous) followed by 2 washings with diethyl ether (anhydrous) and drying in vacuo or under inert atmosphere for several hours at about 100-200°C. If clumps form during drying the zinc dust is re-sieved to -150 mesh. This material should be used immediately or stored under an inert atmosphere away from oxygen and moisture.

In a round-bottom flask was added 0.245 g bis(triphenylphosphine)nickel chloride, 0.34 g sodium iodide, 1.43 g triphenylphosphine, 1.23 g activated zinc dust, 3.78 g monomer and 25ml of anhydrous N-methylpyrolidone (NMP). The mixture was stirred at 65°C overnight. The viscous mixture was worked up by pouring into 100 ml of ethanol containing 10% HCl. The crude product was filtered out and washed with ethanol and acetone thoroughly, and dried at 120°C overnight to give 2.9 g polymer.

### EXAMPLES 11-18

The monomers in Table 3 are polymerized by a method analogous to that of Example 10 above.

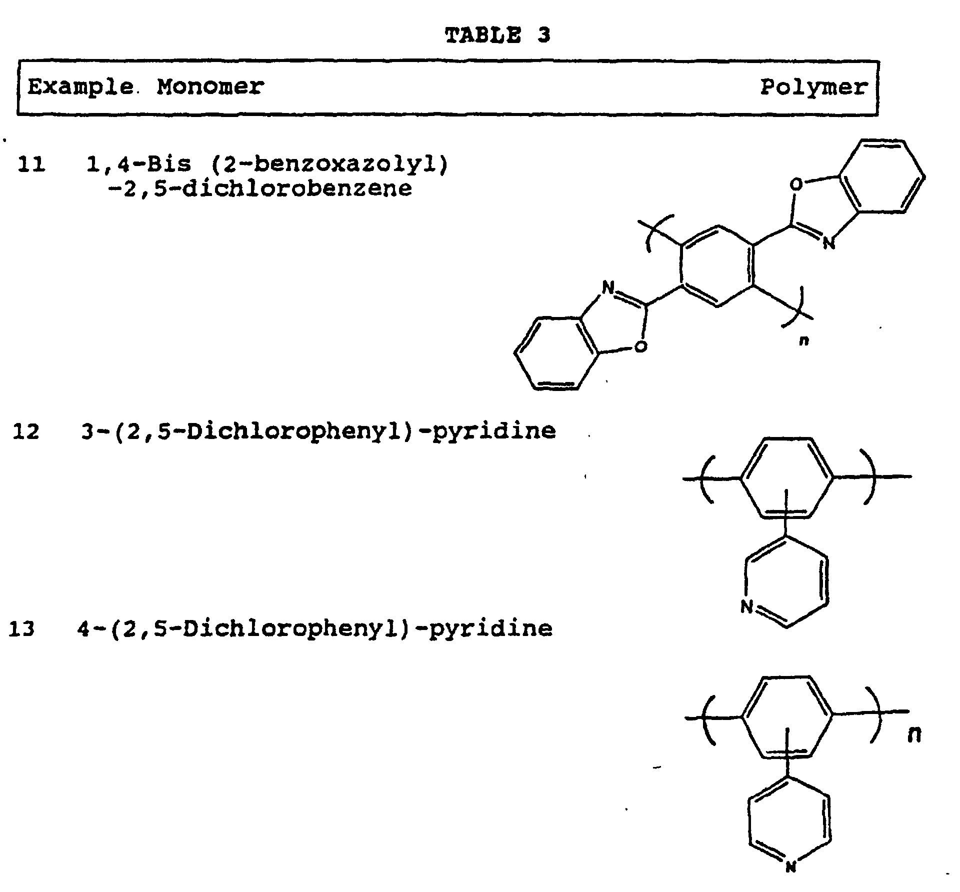

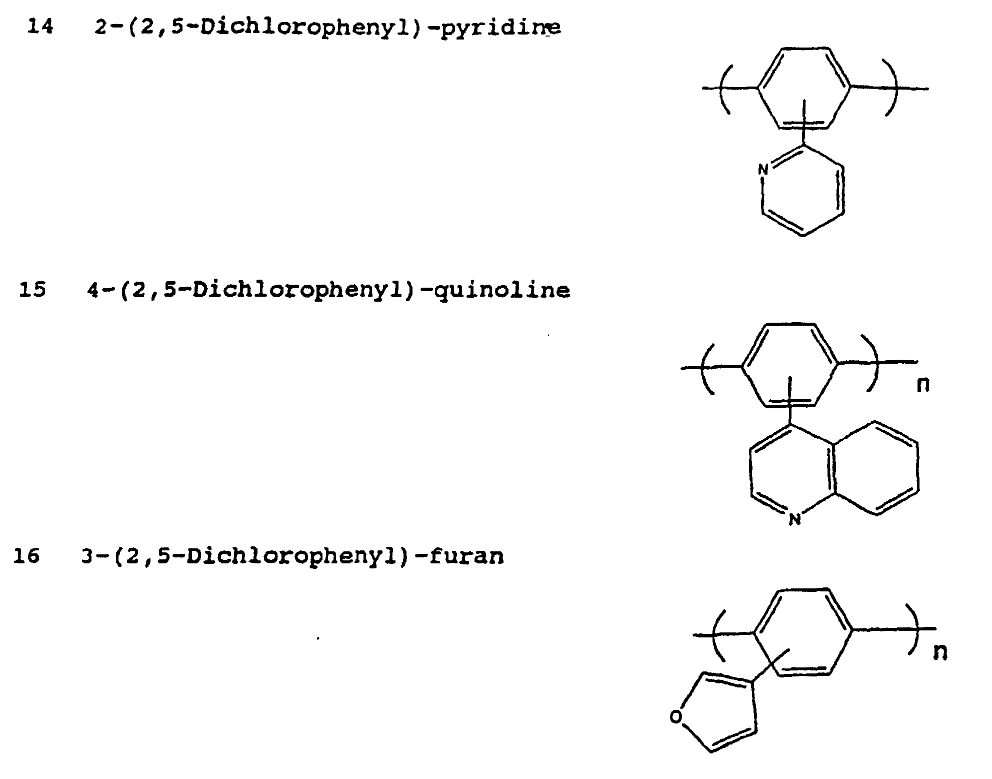

### EXAMPLE 17

### Preparation of 2-(2,4-Dichlorophenyl)benzoxazole

A 2.0 L, three-necked, round-bottomed flask equipped with a mechanical stirrer, a condenser containing a nitrogen inlet valve, and a thermometer was charged with 250 g of 2,4-dichlorobenzoic acid, 157.1 g of 2-aminophenol, and 250 mL of polyphosphoric acid. The mixture was heated under nitrogen for 16 h. The solution was cooled to 140°C and was poured over a chilled 1 M aqueous sodium hydroxide solution. The solid brown precipitate was collected by filtration. The material was then vacuum distilled with a head temperature of 160-180°C. The solid was recrystallized from toluene and dried in a vacuum oven at 80°C for 12 h. Yield 257 g (74%); mp=130.6-131.3.

### EXAMPLE 18

### Polymerization of 2-(2,4-Dichlorophenyl)benzoxazole

A 100 mL round bottomed flask was charged with 0.206 g of *bis*(triphenylphosphine) nickel chloride, 0.244 g of sodium iodide, 1.014 g of triphenylphosphine, 1.027 g of activated zinc dust, 3.000 g of 2-(2,4-dichlorophenyl)benzoxazole, and 15.5 mL of anhydrous N-methylpyrolidone (NMP). The mixture was stirred at 65°C for 17 h under nitrogen. The dark polymer dope was then poured into 100 mL of a 10% hydrogen chloride/ethanol solution and was stirred until the color of the solution turned white. The white solid was collected by filtration and was twice washed with both 100 mL of hot ethanol and 100 mL of acetone. The solid was dried in a vacuum oven at 150°C overnight, M_{w}=29,300.

### EXAMPLE 19

### Copolymerization of 80 % 2-(2,4-Dichlorophenyl)benzoxazole and 20% 2,5 Dichloro-benzophenone

A 100 mL round bottomed flask was charged with 0.430 g of *bis*(triphenylphosphine) nickel chloride, 0.507 g of sodium iodide, 2.112 g of triphenylphosphine, 2.140 g of activated zinc dust, 5.000 g of 2-(2,4-dichlorophenyl)benzoxazole, 1.188 g of 2,5-dichlorobenzophenone, and 32 mL of anhydrous N-methylpyrolidone (NMP). The mixture was stirred at 65°C for 17 h under nitrogen. The dark polymer dope was then poured into 250 mL of a 10% hydrogen chloride/ethanol solution and was stirred until the color of the solution turned white. The white solid was collected by filtration and was washed twice with 250 mL of hot ethanol and twice with 250 mL of acetone. The solid was dried in a vacuum oven at 150°C overnight. M_{w}=39,100.

### EXAMPLE 20

### Copolymerization of 50 % 2-(2,4-Dichlorophenyl)benzoxazole and 50% 2,5 Dichloro-benzophenone

A 100 mL round bottomed flask was charged with 0.413 g of *bis*(triphenylphosphine) nickel chloride, 0.487 g of sodium iodide, 2.027 g of triphenylphosphine, 2.055 g of activated zinc dust, 3.000 g of 2-(2,4-dichlorophenyl)benzoxazole, 2.852 g of 2,5-dichlorobenzophenone, and 31 mL of anhydrous N-methylpyrolidone (NMP). The mixture was stirred at 55°C for 17 h under nitrogen. The dark polymer dope was then poured into 250 mL of a 10% hydrogen chloride/ethanol solution and was stirred until the color of the solution turned white. The white solid was collected by filtration and was twice washed with both 250 mL of hot ethanol and 250 mL of acetone. The solid was dried in a vacuum oven at 150°C overnight, M_{w}=63,200.

### EXAMPLE 21

### Polymerization of 4,4'bis(N-phthalimido)-3,3'-dichlorobiphenyl

A 100 mL round bottomed flask is charged with 0.206 g of *bis*(triphenylphosphine) nickel chloride, 0.244 g of sodium iodide, 1.014 g of triphenylphosphine, 1.027 g of activated zinc dust, 5.831 g of 4,4'-bis(N-phthalimido)-3,3'-dichlorobiphenyl, and 15.5 mL of anhydrous N-methylpyrolidone (NMP). The mixture is stirred at 65°C for 17 h under nitrogen. The polymer dope is then poured into 100 mL of a 10% hydrogen chloride/ethanol solution and is stirred until the solution becomes light in color. The solid is collected by filtration and is twice washed with both hot ethanol and acetone. The solid is dried in a vacuum oven.

### EXAMPLE 22

Polymerization of 2-(2,5-Dichlorophenyl)-4-phenyl-quinoline to the polymer of formula:

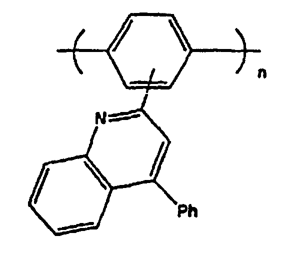

To a round-bottom flask was added 0.262 g of *bis*(triphenylphosphine)nickel chloride, 0.37 g of sodium iodide, 1.91 g of triphenylphosphine, 1.57 g of activated zinc dust, 5.6 g of 2-(2,5-dichloro-phenyl)-4-phenylquinoline and 30 ml of anhydrous NMP. The mixture was stirred at 65°C overnight. The mixture was worked up by stirring with 100 ml of ethanol containing 10% HCl. The crude product was filtered out and washed with ethanol and acetone thoroughly followed by stirring with acetone containing 10% triethylamine, and dried at 120°C overnight to give 4.5 g polymer.

### EXAMPLE 23

### Polymerization of 2-(2,5-Dichlorophenyl)benzoxazole to the polymer of formula:

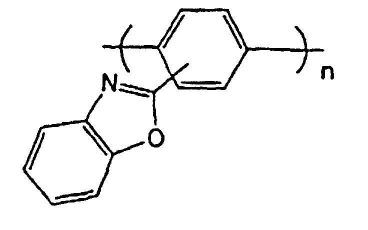

To a round-bottom flask was added 0.206 g of *bis*(triphenylphosphine)nickel chloride, 0.244 g of sodium iodide, 1.01 g of triphenylphosphine, 1.02 g of activated zinc dust, 3.0 g of 2-(2,5-dichlorophenyl)benzoxazole and 16 ml of anhydrous NMP. The mixture was stirred at 65°C overnight. The viscous mixture was worked up by poured into 100 ml of ethanol containing 10% HCl. The crude product was filtered out and washed with ethanol and acetone thoroughly, and dried at 120°C overnight to give 2 g polymer. The T_{g} was measured to be 261oC by DSC.

### EXAMPLE 24

2,5-Difluorobenzoic acid (60 g, 0.38 mol) is mixed with 2-aminophenol (43.7 g, 0.4 mol), and polyphosphoric acid (160 g). The mixture is stirred at 60°C for 2 hours, 110°C for 16 hours and 165°C for 24 hours. The mixture is then poured onto ice and the solid collected on a filter and is washed with 50 ml of 5% aqueous sodium bicarbonate. The solid material is then extracted with hot cyclohexane (100 ml). The cyclohexane solution is filtered through 5 g of silica gel and is concentrated under reduced pressure. The product 2-(2,4-difluoro-phenyl)benzoxazole is filtered and dried under vacuum.

Preparation of:

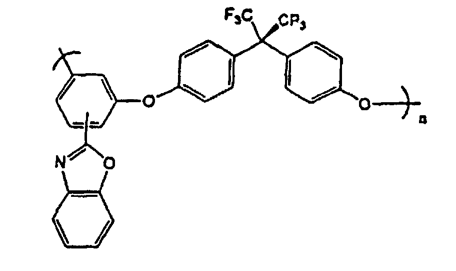

To 2-(2,4-difluoro)benzoxazole (10 g, 21.73 mmol) in 100 ml of NMP and 20 ml of toluene is added potassium carbonate (3.46 g, 25 mmol) and bisphenol AF (4,4'-hexafluoroisopropylidenediphenol) (7.306 g, 21.73 mmol). The mixture is taken to reflux under and water is removed using a Dean-Stark trap. After water ceases to collect the toluene is distilled off and the temperature is raised to 200°C. After 48 hours, or until the desired MW is reached as measured by GPC, the mixture is cooled to room temperature and slowly poured into ethanol to precipitate the product polymer. The polymer is filtered, washed ethanol and acetone, and dried.

### EXAMPLE 25

The polymer of Example 23 (20g) is dissolved in 200 ml of NMP by heating to 120°C and stirring. The solution is cooled to room temperature and cast onto a 30 cm x 60 cm glass plate using a doctors blade set to a height of 125 microns under a flow of dry air. The coated plate is placed in a vacuum oven, and leveled. The coated plate is dried at about 1 torr and 100°C for 4 hours and then 1 torr and 175°C for 16 hours. The dried film is then removed from the glass plate by scoring an edge of the film, immersing the plate into water, and slowing peeling the film off the plate.

### EXAMPLE 26

Following the same procedure as in Example 25 the polymer of Example 20 is cast into a film.

The invention has been described in preferred and exemplary embodiments but is not limited thereto. Those skilled in the art will appreciate that various modifications can be made without departing from the scope of the invention, which is defined by the following claims.

## Claims

1. A polymer of the formula: 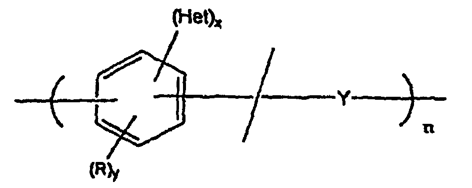 wherein:
up to three CH units in each aromatic ring may be replaced by nitrogen atoms;
Het is a heterocyclic group;
x is 1 or 2;
Y is less than or equal to 4-x;
R is independently alkyl, aryl, alkoxy, aryloxy, ketone, aldehyde, amide, ester, sulfone, cyano, fluoro, and oligomeric or polymeric groups comprising polyalkeneoxy, polyaryleneoxy, polyarylenesulfate, polyarylene sulfone, polyphenoxyphenylketone, polystyrene, polyphenylene, polyamide and polyimide;
Y is selected from the group consisting of nil, -Ar-, -Z-, -Z-Ar-, and -AR-Z-Ar-, where Z is a divalent group selected from the group consisting of -o-, -S-, -NR'-, -O(CO)-, -(CO)NH(CO)-, -NR'(CO)-, phthalimide, pyromellitimide, -CO-, -CH₂-, -CF₂- and -CR'R''-, wherein R' and R" are independently alkyl or aryl, and taken together may be bridging, and where Ar is selected from the group consisting of arylene, heteroarylene and arylene and heteroarylene substituted with at least one R group; and
n is greater than 4.

2. The polymer of claim 1 wherein Het is a heteroaromatic group.

3. The polymer of claim 1 wherein the heterocyclic side groups are selected from the group consisting of benzimidazolyl, benzofuranyl, benzoxazolyl, benzthiazolyl, dioxolanyl, dithianyl, furanyl, imidazolyl, indolyl, isoquinolinyl, maleimidyl, morpholinyl, oxadiazolyl, oxazolyl, phthalimidyl, piperidinyl, purinyl, pyranyl, pyrazinyl, pyridazinyl, pyridyl, pyrimidinyl, quinazolinyl, quinazolonyl, quinolinyl, quinolonyl, quinoxalinyl, succinimidyl, tetrahydrofuranyl, thiophenyl, and triazinyl.

4. The polymer of claim 3 wherein said polymer is a copolymer.

5. The polymer of claim 1 wherein Y is nil.

6. The polymer of claim 1 wherein Y is nil and greater than 50% of the heterocyclic substituted arylene repeat units are 1,4 catenated.

7. The polymer of claim 5 wherein y=0.

8. The polymer of claim 6 wherein y=0.

9. The polymer of claim 1 wherein Y is substantially nil, x is 1, and y is 0.

10. The polymer of claim 9 wherein Het is selected from the group consisting of 2-benzimidazolyl, 2-benzoxazolyl, 2-benzthiazolyl, 2-quinolyl, and 4-phenyl-2-quinolyl.

11. The polymer of claim 9 wherein at least 50% of the heterocyclic substituted arylene units are 1,4 catenated.

12. The polymer of claim 1 wherein Y is selected from the group consisting of 5-amino-1,4-phenylene, 2-benzoyl-1,4-phenylene, 4-benzoyl-1,3-phenylene, 5-benzoyl-1,3-phenylene, 2-carboxymethyl-1,4-phenylene, 4-carboxymethyl-1,3-phenylene, 5-carboxy-methyl-1,3-phenylene, 2-phenyl-1,4-phenylene, isophthaloyl, 1,4-phenylene, 1,3-phenylene, 1,2-phenylene, 3,5-pyridinediyl, and terephthaloyl.

13. The polymer of claim 12 wherein Y is 1,3-phenylene.

14. The polymer of claim 13 wherein x is 1, y is 0, and Het is chosen from the group consisting of benzimidazole, benzofuran, benzoxazole, benzthiazole, dioxolane, dithiane, furan, imidazole, indole, isoquinoline, maleimide, morpholine, oxadiazole, oxazole, phthalimide, piperidine, purine, pyran, pyrazine, pyridazine, pyridine, pyrimidine, quinazoline, quinazolone, quinoline, quinolone, quinoxaline, succinimide, tetrahydrofuran, thiophene, and triazine.

15. The polymer of claim 13 wherein x is 1, y is 0, and Het is chosen from the group consisting of 2-benzimidazole, 2-benzoxazole, 2-benzthiazole, 2-quinolyl, and 4-phenyl-2-quinolyl.

16. The polymer of claim 1 wherein Y is selected from the group consisting of -(phenylene-CONH-phenylene-NHCO)-phenylene, -(phenylene-CONH-phenylene)-, -(phenylene-COO-phenylene-OCO)-phenylene-, -(phenylene-carbonyl)-phenylene-, and -(phenylene-carbonyl-phenylene-oxo-phenylene-carbonyl-phenylene)-.

17. The polymer of claim 1 wherein the repeat units Y form a block selected from the group consisting of -phenylene-CONH-phenylene-NHCO)ₘ-phenylene, -(phenylene-CONH)ₘ-phenylene-, -(phenylene-COO-phenylene-OCO)ₘ-phenylene-, -(phenylene-carbonyl)ₘ-phenylene-, and-(phenylene-carbonate-phenylene-2,2-isopropyl-idene-carbonate)ₘ-phenylene-.

18. The polymer of claim 1 wherein the polymer is a block co-polymer and the repeat units Y form oligomeric or polymeric segments selected from the group consisting of polyamide, polyarylate, polyaryleneoxide, polycarbonate, polydimethylsiloxane, polyester, polyetherketone, polyphenylene, substituted polyphenylene, polyphenylenesulfide, and polystyrene.

19. The polymer of claim 1 wherein the heterocyclic groups are at least partly randomly distributed among the possible positions on the aromatic rings.

20. The polymer of claim 1 wherein at least 5% of the heterocyclic groups are ortho to the site of catenation.

21. The polymer of claim 20 wherein at least 10% of the heterocyclic groups are ortho to the site of catenation.

22. The polymer of claim 21 wherein at least 25% of the heterocyclic groups are ortho to the site of catenation.

23. The polymer of claim 1 wherein at least a portion of the heterocyclic groups are protonated.

24. The polymer of claim 1 wherein n is from 10 to 100,000.

25. The polymer of claim 1 wherein n is from 20 to 10,000.

26. The polymer of claim 1 wherein n is from 50 to 1,000.

27. The polymer of claim 1 wherein Y is nil and n is up to 500.

28. A polymeric composition comprising the polymer of claim 1 and an acid.

29. The polymer of claim 28 wherein the acid is a Bronsted acid having a pKₐ no more than 2 units greater than the pKₐ of the conjugate acid of said heterocyclic side group.

30. The composition of claim 28 wherein the acid is a Lewis acid.

31. A process for preparing the composition of claim 1 wherein a heterocyclic substituted arylene of structure: 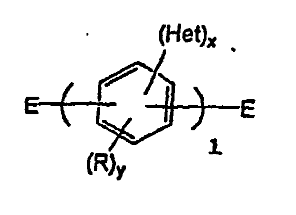 is allowed to react with a complementary difunctional monomer E'-(Y)ₘ-E' where E and E' are complementary reactive groups.

32. The process of claim 31 wherein E is selected from the group consisting of acid chloride, amine aryl alcohol, aryl amine, aryl acid chloride, aryl carboxylic acid, arylfluoride, carboxylic acid, epoxide, fluoride, hydroxy, isocyanate, and silyl chloride.

33. The process of claim 31 wherein E' is selected from the group consisting of acid chloride, amine, aryl alcohol, aryl amine, aryl acid chloride, aryl carboxylic acid, arylfluoride, carboxylic acid, epoxide, fluoride, hydroxy, isocyanate, and silyl chloride.

34. The process of claim 31 wherein E is selected from the group consisting of aryl fluoride, and fluoride, and E' is an alcohol anion.

35. The process of claim 31 wherein E is selected from the group consisting of acid chloride, aryl acid chloride, aryl carboxylic acid, carboxylic acid and E' is selected from the group consisting of hydroxy, and amine.

36. The process of claim 31 wherein E is selected from the group consisting of amine, aryl alcohol, aryl amine, and hydroxy and E' is selected from the group consisting of acid chloride, carboxylic acid, epoxide, isocyanate, and silyl chloride.

37. The process of claim 31 wherein l is between 2 and 200.

38. The process of claim 31 wherein l is between 1 and 10 and m is between 1 and 10.

39. A polymer comprising repeat units of the general formula: 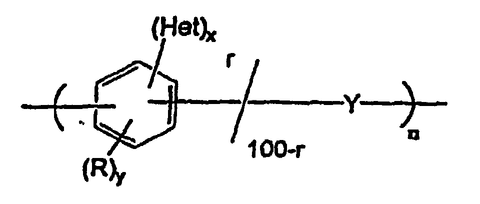 where r is at least 1; and wherein:
up to three CH units in each aromatic ring may be replaced by nitrogen atoms;
Het is a heterocyclic group;
x is 1 or 2;
Y is less than or equal to 4-x
R is independently alkyl, aryl, alkoxy, aryloxy, ketone, aldehyde, amide, ester, sulfone, cyano, fluoro, and oligomeric or polymeric groups comprising polyalkeneoxy, polyaryleneoxy, polyarylenesulfate, polyarylene sulfone, polyphenoxyphenylketone, polystyrene, polyphenylene, polyamide and polyimide;
Y is selected from the group consisting of nil, -Ar-, -Z-, -Z-Ar-, and -AR-Z-Ar-, where Z is a divalent group selected from the group consisting of -O-, -S-, -NR'-, -O(CO)-, -(CO)N(CO)-, -NR'(CO)-, phthalimide, pyromellitimide, -CO-, -CH₂-, -CF₂- and -CR'R''-, wherein R' and R" are independently alkyl or aryl, and taken together may be bridging, and where Ar is selected from the group consisting of arylene, heteroarylene and arylene and heteroarylene substituted with at least one R group; and
n is greater than 4.

40. The polymer of claim 39 wherein r is at least 10.

41. The polymer of claim 39 wherein r is at least 20.

42. The polymer of claim 39 wherein Het is a heteroaromatic group.

43. The polymer of claim 39 wherein the heterocyclic side groups are selected from the group consisting of benzimidazolyl, benzofuranyl, benzoxazolyl, benzthiazolyl, dioxolanyl, dithianyl, furanyl, imidazolyl, indolyl, isoquinolinyl, maleimidyl, vmorpholinyl, oxadiazolyl, oxazolyl, phthalimidyl, piperidinyl, purinyl, pyranyl, pyrazinyl, pyridazinyl, pyridyl, pyrimidinyl, quinazolinyl, quinazolonyl, quinolinyl, quinolonyl, quinoxalinyl, succinimidyl, tetrahydrofuranyl, thiophenyl, and triazinyl.

44. The polymer of claim 39 wherein the polymer comprises the repeat units:

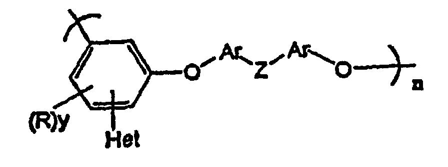

45. The polymer of claim 39 wherein the polymer comprises the repeat units:

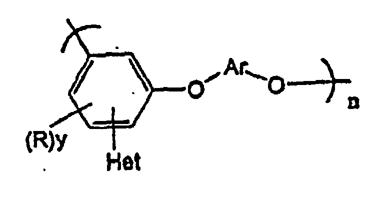

46. The polymer of claim 43 wherein Y is substantially nil, x is 1, and y is 0.

47. The polymer of claim 46 wherein Het is selected from the group consisting of 2-benzimidazolyl, 2-benzoxazolyl, 2-benzthiazolyl, 2-quinolyl, and 4-phenyl-2-quinolyl.

48. The polymer of claim 46 wherein at least 50% of the heterocyclic substituted arylene units are 1,4 catenated.

49. The polymer of claim 39 wherein Y is selected from the group consisting of 5-amino-1,4-phenylene, 2-benzoyl-1,4-phenylene, 4-benzoyl-1,3-phenylene, 5-benzoyl-1,3-phenylene, 2-carboxymethyl-1,4-phenylene, 4-carboxymethyl-1,3-phenylene, 5-carboxymethyl-1,3-phenylene, 2-phenyl-1,4-phenylene, isophthaloyl, 1,4-phenylene, 1,3-phenylene, 1,2-phenylene, 3,5-pyridinediyl, and terephthaloyl.

50. The polymer of claim 49 wherein Y is 1,3-phenylene.

51. The polymer of claim 50 wherein x is 1, y is 0, and Het is chosen from the group consisting of benzimidazole, benzofuran, benzoxazole, benzthiazole, dioxolane, dithiane, furan, imidazole, indole, isoquinoline, maleimide, morpholine, oxadiazole, oxazole, phthalimide, piperidine, purine, pyran, pyrazine, pyridazine, pyridine, pyrimidine, quinazoline, quinazolone, quinoline, quinolone, quinoxaline, succinimide, tetrahydrofuran, thiophene, and triazine.

52. The polymer of claim 50 wherein x is 1, y is 0, and Het is chosen from the group consisting of 2-benzimidazole, 2-benzoxazole, 2-benzthiazole, 2-quinolyl, and 4-phenyl-2-quinolyl.

53. The polymer of claim 39 wherein the heterocyclic groups are at least partly randomly distributed among the possible positions on the aromatic rings.

54. The polymer of claim 39 wherein at least 5% of the heterocyclic groups are ortho to the site of catenation.

55. The polymer of claim 39 wherein n is from 50 to 1,000.

56. The polymer of claim 39 wherein Y is nil and n is up to 500.

57. A polymeric composition comprising the polymer of claim 39 and an acid.

58. A process for preparing the composition of claim 39 wherein a heterocyclic substituted arylene of structure: 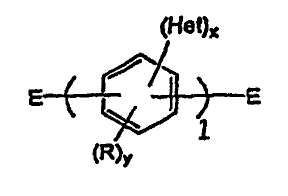 is allowed to react with a complementary difunctional monomer E'-(Y)ₘ-E' where E and E' are complementary reactive groups.

59. The process of claim 58 wherein l is 1.

60. The process of claim 58 wherein l is between 2 and 200.

61. The process of claim 58 wherein l is between 1 and 10 and m is between 1 and 10.

## Patentansprüche

1. Polymer der Formel: 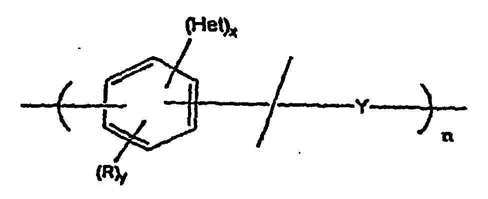 worin:
bis zu drei CH-Einheiten in jedem aromatischen Ring durch Stickstoffatome ersetzt sein können;
Het eine heterocyclische Gruppe ist;
x 1 oder 2 ist;
y weniger als oder gleich 4-x ist;
R unabhängig Alkyl, Aryl, Alkoxy, Aryloxy, Keton, Aldehyd, Amid, Ester, Sulfon, Cyano, Fluoro und oligomere oder polymere Gruppen, umfassend Polyalkenoxy, Polyarylenoxy, Polyarylensulfat, Polyarylensulfon, Polyphenoxyphenylketon, Polystyrol, Polyphenylen, Polyamid und Polyimid, ist;
Y ausgewählt ist aus der Gruppe, bestehend aus Nullvariante, -Ar-, -Z-, -Z-Ar- und -Ar-Z-Ar-, wobei Z eine divalente Gruppe ist, ausgewählt aus der Gruppe bestehend aus -O-, -S-, -NR'-, -O(CO)-, -(CO)NH(CO)-, -NR'(CO)-, Phthalimid, Pyromellitimid, -CO-, -CH₂-, -CF₂- und -CR'R"-; worin R' und R" unabhängig Alkyl oder Aryl sind und zusammengenommen verbrückend sein können und wobei Ar ausgewählt ist aus der Gruppe bestehend aus Arylen, Heteroarylen und Arylen und Heteroarylen, substituiert mit mindestens einer Gruppe R; und n größer als 4 ist.

2. Polymer nach Anspruch 1, wobei Het eine heteroaromatische Gruppe ist.

3. Polymer nach Anspruch 1, wobei die heterocyclischen Seitengruppen ausgewählt sind aus der Gruppe bestehend aus Benzimidazolyl, Benzofuranyl, Benzoxazolyl, Benzthiazolyl, Dioxolanyl, Dithianyl, Furanyl, Imidazolyl, Indolyl, Isochinolinyl, Maleimidyl, Morpholinyl, Oxadiazolyl, Oxazolyl, Phthalimidyl, Piperidinyl, Purinyl, Pyranyl, Pyrazinyl, Pyridazinyl, Pyridyl, Pyrimidinyl, Chinazolinyl, Chinazolonyl, Chinolinyl, Chinolonyl, Chinoxalinyl, Succinimidyl, Tetrahydrofuranyl, Thiophenyl und Triazinyl.

4. Polymer nach Anspruch 3, wobei besagtes Polymer ein Copolymer ist.

5. Polymer nach Anspruch 1, wobei Y Nullvariante ist.

6. Polymer nach Anspruch 1, wobei Y Nullvariante ist und mehr als 50% der heterocyclisch substituierten Arylenwiederholungseinheiten 1,4-verbunden sind.

7. Polymer nach Anspruch 5, wobei y = 0 ist.

8. Polymer nach Anspruch 6, wobei y = 0 ist.

9. Polymer nach Anspruch 1, wobei Y im Wesentlichen Nullvariante ist, x 1 und y 0 ist.

10. Polymer nach Anspruch 9, wobei Het ausgewählt ist aus der Gruppe bestehend aus 2-Benzimidazolyl, 2-Benzoxazolyl, 2-Benzthiazolyl, 2-Chinolyl und 4-Phenyl-2-chinolyl.

11. Polymer nach Anspruch 9, wobei mindestens 50% der heterocyclisch substituierten Aryleneinheiten 1,4-verbunden sind.

12. Polymer nach Anspruch 1, wobei Y ausgewählt ist aus der Gruppe, bestehend aus 5-Amino-1,4-phenylen, 2-Benzoyl-1,4-phenylen, 4-Benzoyl-1,3-phenylen, 5-Benzoyl-1,3-phenylen, 2-Carboxymethyl-1,4-phenylen, 4-Carboxymethyl-1,3-phenylen, 5-Carboxymethyl-1,3-phenylen, 2-Phenyl-1,4-phenylen, Isophthaloyl, 1,4-Phenylen,1,3-Phenylen, 1,2-Phenylen, 3,5-Pyridindiyl und Terephthaloyl.

13. Polymer nach Anspruch 12, wobei Y 1,3-Phenylen ist.

14. Polymer nach Anspruch 13, wobei x 1 ist, y 0 ist und Het ausgewählt ist aus der Gruppe bestehend aus Benzimidazol, Benzofuran, Benzoxazol, Benzthiazol, Dioxolan, Dithian, Furan, Imidazol, Indol, Isochinolin, Maleimid, Morpholin, Oxadiazol, Oxazol, Phthalimid, Piperidin, Purin, Pyran, Pyrazin, Pyridazin, Pyridin, Pyrimidin, Chinazolin, Chinazolon, Chinolin, Chinolon, Chinoxalin, Succinimid, Tetrahydrofuran, Thiophen und Triazin.

15. Polymer nach Anspruch 13, wobei x 1 ist, y 0 ist und Het ausgewählt ist aus der Gruppe bestehend aus 2-Benzimidazol, 2-Benzoxazol, 2-Bezthiazol, 2-Chinolyl und 4-Phenyl-2-chinolyl.

16. Polymer nach Anspruch 1, wobei Y ausgewählt ist aus der Gruppe bestehend aus -(Phenylen-CONH-Phenylen-NHCO)-Phenylen, -(Phenylen-CONH-Phenylen)-, -(Phenylen-COO-Phenylen-OCO)-Phenylen-, -(Phenylen-Carbonyl)-Phenylen- und -(Phenylen-Carbonyl-Phenylen-Oxo-Phenylen-Carbonyl-Phenylen)-.

17. Polymer nach Anspruch 1, wobei die Wiederholungseinheiten Y einen Block formen, ausgewählt aus der Gruppe bestehend aus -(Phenylen-CONH-Phenylen-NHCO)ₘ-Phenylen, -(Phenylen-CONH)ₘ-Phenylen-, -(Phenylen-COO-Phenylen-OCO)ₘ-Phenylen-, -(Phenylen-Carbonyl)ₘ-Phenylen- und -(Phenylen-Carbonat-Phenylen-2,2-lsopropyliden-Carbonat)ₘ-Phenylen-.

18. Polymer nach Anspruch 1, wobei das Polymer ein Blockcopolymer ist und die Wiederholungseinheiten Y oligomere oder polymere Segmente formen, ausgewählt aus der Gruppe bestehend aus Polyamid, Polyarylat, Polyarylenoxid, Polycarbonat, Polydimethylsiloxan, Polyester, Polyetherketon, Polyphenylen, substituiertes Polyphenylen, Polyphenylensulfid und Polystyrol.

19. Polymer nach Anspruch 1, wobei die heterocyclischen Gruppen mindestens teilweise zufällig entlang den möglichen Positionen der aromatischen Ringe verteilt sind.

20. Polymer nach Anspruch 1, wobei mindestens 5% der heterocyclischen Gruppen in Orthostellung zur Stelle der Verknüpfung sind.

21. Polymer nach Anspruch 20, wobei mindestens 10% der heterocyclischen Gruppen in Orthostellung zur Stelle der Verknüpfung sind.

22. Polymer nach Anspruch 21, wobei mindestens 25% der heterocyclischen Gruppen in Orthostellung zur Stelle der Verknüpfung sind.

23. Polymer nach Anspruch 1, wobei mindestens ein Teil der heterocyclischen Gruppen protoniert sind.

24. Polymer nach Anspruch 1, wobei n von 10 bis 100000 ist.

25. Polymer nach Anspruch 1, wobei n von 20 bis 10000 ist.

26. Polymer nach Anspruch 1, wobei n von 50 bis 1000 ist.

27. Polymer nach Anspruch 1, wobei Y Nullvariante ist und n bis zu 500 ist.

28. Polymere Zusammensetzung, umfassend das Polymer nach Anspruch 1 und eine Säure.

29. Polymer nach Anspruch 28, wobei die Säure eine Bronsted-Säure ist, mit einem pKₐ-Wert nicht mehr als zwei Einheiten größer als der pKₐ-Wert der konjugierten Säure besagter heterocyclischer Seitengruppe.

30. Zusammensetzung nach Anspruch 28, wobei die Säure eine Lewis-Säure ist.

31. Verfahren zur Herstellung der Zusammensetzung nach Anspruch 1, wobei ein heterocyclisch substituiertes Arylen der Struktur: 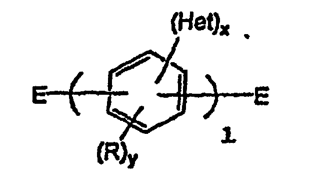 reagiert wird mit einem komplementären difunktionellen Monomer E'-(Y)ₘ-E', wobei E und E' komplementäre reaktive Gruppen sind.

32. Verfahren nach Anspruch 31, wobei E ausgewählt ist aus der Gruppe bestehend aus Säurechlorid, Aminarylalkohol, Arylamin, Arylsäurechlorid, Arylcarboxylsäure, Arylfluorid, Carboxylsäure, Epoxid, Fluorid, Hydroxy, Isocyanat und Silylchlorid.

33. Verfahren nach Anspruch 31, wobei E' ausgewählt ist aus der Gruppe bestehend aus Säurechlorid, Amin, Arylalkohol, Arylamin, Arylsäurechlorid, Arylcarboxylsäure, Arylfluorid, Carboxylsäure, Epoxid, Fluorid, Hydroxy, Isocyanat und Silylchlorid.

34. Verfahren nach Anspruch 31, wobei E ausgewählt ist aus der Gruppe bestehend aus Arylfluorid und Fluorid und E' ein Alkoholanion ist.

35. Verfahren nach Anspruch 31, wobei E ausgewählt ist aus der Gruppe bestehend aus Säurechlorid, Arylsäurechlorid, Arylcarboxylsäure und Carboxylsäure und E' ausgewählt ist aus der Gruppe bestehend aus Hydroxy und Amin.

36. Verfahren nach Anspruch 31, wobei E ausgewählt ist aus der Gruppe bestehend aus Amin, Arylalkohol, Arylamin und Hydroxy und E' ausgewählt ist aus der Gruppe bestehend aus Säurechlorid, Carboxylsäure, Epoxid, Isocyanat und Silylchlorid.

37. Verfahren nach Anspruch 31, wobei I zwischen 2 und 200 ist.

38. Verfahren nach Anspruch 31, wobei I zwischen 1 und 10 und m zwischen 1 und 10 ist.

39. Polymer, umfassend Wiederholungseinheiten der folgenden allgemeinen Formel: 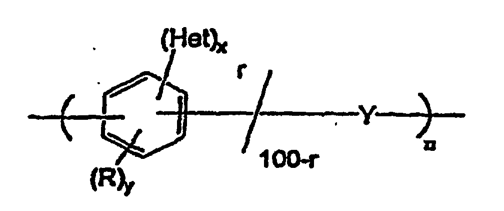 wobei r mindestens 1 ist; und wobei:
bis zu drei CH-Einheiten in jedem aromatischen Ring durch Stickstoffatome ersetzt sein können;
Het eine heterocyclische Gruppe ist;
x 1 oder 2 ist;
y weniger als oder gleich 4-x ist;
R unabhängig Alkyl, Aryl, Alkoxy, Aryloxy, Keton, Aldehyd, Amid, Ester, Sulfon, Cyano, Fluoro und oligomere oder polymere Gruppen, umfassend Polyalkenoxy, Polyarylenoxy, Polyarylensulfat, Polyarylensulfon, Polyphenoxyphenylketon, Polystyrol, Polyphenylen, Polyamid und Polyimid, ist;
Y ausgewählt ist aus der Gruppe bestehend aus Nullvariante, -Ar-, -Z-, -Z-Ar- und -Ar-Z-Ar-, wobei Z eine divalente Gruppe ist, ausgewählt aus der Gruppe bestehend aus -O-, -S-, -NR'-, -O(CO)-, -(CO)N(CO)-, -NR'(CO)-, Phthalimid, Pyromellitimid, -CO-, -CH₂-, -CF₂- und -CR'R"-; wobei R' und R" unabhängig Alkyl oder Aryl sind und zusammengenommen verbrückend sein können und wobei Ar ausgewählt ist aus der Gruppe bestehend aus Arylen, Heteroarylen sowie Arylen und Heteroarylen, substituiert mit mindestens einer Gruppe R; und n größer als 4 ist.

40. Polymer nach Anspruch 39, wobei r mindestens 10 ist.

41. Polymer nach Anspruch 39, wobei r mindestens 20 ist.

42. Polymer nach Anspruch 39, wobei Het eine heteroaromatische Gruppe ist.

43. Polymer nach Anspruch 39, wobei die heterocyclische Seitengruppen ausgewählt sind aus der Gruppe bestehend aus Benzimidazolyl, Benzofuranyl, Benzoxazolyl, Benzthiazolyl, Dioxolanyl, Dithianyl, Furanyl, Imidazolyl, Indolyl, Isochinolinyl, Maleimidyl, Morpholinyl, Oxadiazolyl, Oxazolyl, Phthalimidyl, Piperidinyl, Purinyl, Pyranyl, Pyrazinyl, Pyridazinyl, Pyridyl, Pyrimidinyl, Chinazolinyl, Chinazolonyl, Chinolinyl, Chinolonyl, Chinoxalinyl, Succinimidyl, Tetrahydrofuranyl, Thiophenyl und Triazinyl.

44. Polymer nach Anspruch 39, wobei das Polymer folgende Wiederholungseinheiten aufweist:

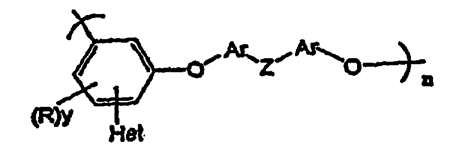

45. Polymer nach Anspruch 39, wobei das Polymer folgende Wiederholungseinheiten aufweist:

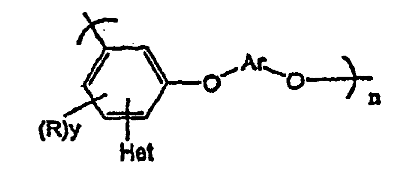

46. Polymer nach Anspruch 43, worin Y im Wesentlichen Nullvariante ist, x 1 ist und y 0 ist.

47. Polymer nach Anspruch 46, wobei Het ausgewählt ist aus der Gruppe bestehend aus 2-Benzimidazolyl, 2-Benzoxazolyl, 2-Benzthiazolyl, 2-Chinolyl und 4-Phenyl-2-chinolyl.

48. Polymer nach Anspruch 46, wobei mindestens 50% der heterocyclischen substituierten Aryleneinheiten 1,4-verbunden sind.

49. Polymer nach Anspruch 39, wobei Y ausgewählt ist aus der Gruppe bestehend aus 5-Amino-1,4-phenylen, 2-Benzoyl-1,4-phenylen, 4-Benzoyl-1,3-phenylen, 5-Benzoyl-1,3-phenylen, 2-Carboxymethyl-1,4-phenylen, 4-Carboxymethyl-1,3-phenylen, 5-Carboxymethyl-1,3-phenylen, 2-Phenyl-1,4-phenylen, Isophthaloyl, 1,4-Phenylen, 1-3-Phenylen, 1,2-Phenylen, 3,5-Pyridindiyl und Terephthaloyl.

50. Polymer nach Anspruch 49, wobei Y 1,3-Phenylen ist.

51. Polymer nach Anspruch 50, wobei x 1 ist, y 0 ist und Het ausgewählt ist aus der Gruppe bestehend aus Benzimidazol, Benzofuran, Benzoxazol, Benzthiazol, Dioxolan, Dithian, Furan, Imidazol, Indol, Isochinolin, Maleimid, Morpholin, Oxadiazol, Oxazol, Phthalimid, Piperidin, Purin, Pyran, Pyrazin, Pyridazin, Pyridin, Pyrimidin, Chinazolin, Chinazolon, Chinolin, Chinolon, Chinoxalin, Succinimid, Tetrahydrofuran, Thiophen und Triazin.

52. Polymer nach Anspruch 50, wobei x 1 ist, y 0 ist und Het ausgewählt ist aus der Gruppe bestehend aus 2-Benzimidazol, 2-Benzoxazol, 2-Benzthiazol, 2-Chinolyl und 4-Phenyl-2-chinolyl.

53. Polymer nach Anspruch 39, wobei die heterocyclischen Gruppen zumindest teilweise zufällig unter den möglichen Positionen an den aromatischen Ringen verteilt sind.

54. Polymer nach Anspruch 39, wobei mindestens 5% der heterocyclischen Gruppen in Orthostellung zur Stelle der Verknüpfung sind.

55. Polymer nach Anspruch 39, wobei n von 50 bis 1000 ist.

56. Polymer nach Anspruch 39, wobei Y Nullvariante ist und n bis zu 500 ist.

57. Polymere Zusammensetzung, umfassend das Polymer nach Anspruch 39 und eine Säure.

58. Verfahren zur Herstellung der Zusammensetzung nach Anspruch 39, worin ein heterocyclisch substituiertes Arylen der Struktur: 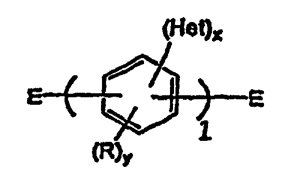 mit einem komplementären difunktionellen Monomer E'-(Y)ₘ-E' reagiert wird, wobei E und E' komplementäre reaktive Gruppen sind.

59. Verfahren nach Anspruch 58, wobei I 1 ist.

60. Verfahren nach Anspruch 58, wobei I zwischen 2 und 200 ist.

61. Verfahren nach Anspruch 58, wobei I zwischen 1 und 10 ist und m zwischen 1 und 10 ist.

## Revendications

1. Polymère de formule : 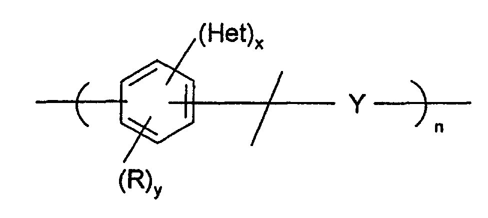
où : jusqu'à trois unités CH dans chaque cycle aromatique peuvent être remplacés par des atomes d'azote ;
Het est un groupement hétérocyclique ;
x est 1 ou 2 ;
y est inférieur ou égal à 4-x ;
R est indépendamment des groupements alkyle, aryle, alcoxy, aryloxy, cétone, aldéhyde, amide, ester, sulfone, cyano, fluoro et des groupements oligomères ou polymères comprenant un polyalcènoxy, polyarylènoxy, polyarylènesulfate, polyarylène sulfone, polyphénoxyphénylcétone, polystyrène, polyphénylène, polyamide et polyimide ;
Y est choisi parmi le groupe constitué de rien, -Ar-, -Z-, -Z-Ar- et de -Ar-Z-Ar-, où Z est un groupement divalent choisi parmi le groupe constitué de -O-, -S-, -NR'-, -O(CO)-, -(CO)NH(CO)-, -NR'(CO)-, phtalimide, pyromellitimide, -CO-, -CH₂-, -CF₂- et de -CR'R''-, où R' et R'' sont indépendamment alkyle ou aryle et, ensemble, peuvent former un pont, et où Ar est choisi parmi le groupe constitué d'un arylène, d'un hétéroarylène d'un arylène et d'un hétéroarylène substitué par au moins un groupement R ; et
n est supérieur à 4.

2. Polymère selon la revendication 1 où Het est un groupement hétéroaromatique.

3. Polymère selon la revendication 1 où les groupements hétérocycliques latéraux sont choisis parmi le groupe constitué du benzimidazolyle, benzofuranyle, benzoxazolyle, benzothiazolyle, dioxolanyle, dithianyle, furanyle, imidazolyle, indolyle, isoquinolinyle, maléimidyle, morpholinyle, oxadiazolyle, oxazolyle, phtalimidyle, pipéridinyle, purinyle, pyranyle, pyrazinyle, pyridazinyle, pyridyle, pyrimidinyle, quinazolinyle, quinazolonyle, quinolinyle, quinolonyle, quinoxalinyle, succinimidyle, tétrahydrofuranyle, thiophényle et triazinyle.

4. Polymère selon la revendication 3 où ledit polymère est un copolymère.

5. Polymère selon la revendication 1 où Y est rien.

6. Polymère selon la revendication 1 où Y est rien et plus de 50 % des motifs répétitifs arylène substitué par un hétérocycle présentent un enchaînement en 1,4.

7. Polymère selon la revendication 5 où y = 0.

8. Polymère selon la revendication 6 où y = 0.

9. Polymère selon la revendication 1 où Y est substantiellement rien, x est 1 et y est 0.

10. Polymère selon la revendication 9 où Het est choisi parmi le groupe constitué du 2-benzimidazolyle, 2-benzoxazolyle, 2-benzothiazolyle, 2-quinolyle, et 4-phényl-2-quinolyle.

11. Polymère selon la revendication 9 où au moins 50 % des motifs arylène substitué par un hétérocycle présentent un enchaînement en 1,4.

12. Polymère selon la revendication 1 où Y est choisi parmi le groupe constitué du 5-amino-1,4-phénylène, 2-benzoyl-1,4-phénylène, 4-benzoyl-1,3-phénylène, 5-benzoyl-1,3-phénylène, 2-carboxyméthyl-1,4-phénylène, 4-carboxyméthyl-1,3-phénylène, 5-carboxyméthyl-1,3-phénylène, 2-phényl-1,4-phénylène, isophtaloyle, 1,4-phénylène, 1,3-phénylène, 1,2-phénylène, 3,5-pyridinediyle et téréphtaloyle.

13. Polymère selon la revendication 12 où Y est 1,3-phénylène.

14. Polymère selon la revendication 13 où x est 1, y est 0 et Het est choisi parmi le groupe constitué du benzimidazole, benzofurane, benzoxazole, benzothiazole, dioxolane, dithiane, furane, imidazole, indole, isoquinoline, maléimide, morpholine, oxadiazole, oxazole, phtalimide, pipéridine, purine, pyrane, pyrazine, pyridazine, pyridine, pyrimidine, quinazoline, quinazolone, quinoline, quinolone, quinoxaline, succinimide, tétrahydrofurane, thiophène et triazine.

15. Polymère selon la revendication 13 où x est 1, y est 0 et Het est choisi parmi le groupe constitué du 2-benzimidazole, 2-benzoxazole, 2-benzothiazole, 2-quinolyle, et 4-phényle-2-quinolyle.

16. Polymère selon la revendication 1 où Y est choisi parmi le groupe constitué du -(phénylène-CONH-phénylène-NHCO)-phénylène, -(phénylène-CONH-phénylène), - (phénylène-COO-phénylène-OCO)-phénylène-,-(phénylène-carbonyl)-phénylène- et -(phénylène-carbonyl-phénylène-oxo-phénylène-carbonyle-phénylène)-.

17. Polymère selon la revendication 1 où les motifs répétitifs Y forment un bloc choisi parmi le groupe constitué du -(phénylène-CONH-phénylène-NHCO)ₘ-phénylène, -(phénylène-CONH)ₘ-phénylène-, -(phénylène-COO-phénylène-OCO)ₘ-phénylène-, -(phénylène-carbonyl)ₘ-phénylène- et -(phénylène-carbonate-phénylène-2,2-isopropyle-idène-carbonate)ₘ-phénylène-.

18. Polymère selon la revendication 1 où le polymère est un co-polymère séquencé et les motifs répétitifs Y forment des segments oligomères ou polymères choisis parmi le groupe constitué du polyamide, polyarylate, polyarylènoxyde, polycarbonate, polydiméthylesiloxane, polyester, polyéthercétone, polyphénylène, polyphénylène substitué, polysulfure de phénylène et polystyrène.

19. Polymère selon la revendication 1 où les groupements hétérocycliques sont au moins en partie répartis de manière aléatoire entre les positions possibles sur les cycles aromatiques.

20. Polymère selon la revendication 1 où au moins 5 % des groupements hétérocycliques sont en ortho par rapport au site d'enchaînement.

21. Polymère selon la revendication 20 où au moins 10 % des groupements hétérocycliques sont en ortho par rapport au site d'enchaînement.

22. Polymère selon la revendication 21 où au moins 25 % des groupements hétérocycliques sont en ortho par rapport au site d'enchaînement.

23. Polymère selon la revendication 1 où au moins une partie des groupements hétérocycliques sont protonés.

24. Polymère selon la revendication 1 où n est de 10 à 100.000.

25. Polymère selon la revendication 1 où n est de 20 à 10.000.

26. Polymère selon la revendication 1 où n est de 50 à 1.000.

27. Polymère selon la revendication 1 où Y est rien et n vaut jusqu'à 500.

28. Composition polymère comprenant le polymère selon la revendication 1 et un acide.

29. Polymère selon la revendication 28 où l'acide est un acide de Bronsted ayant un pK supérieur de pas plus de 2 unités au pK de l'acide conjugué dudit groupement hétérocyclique latéral.

30. Composition selon la revendication 28 où l'acide est un acide de Lewis.

31. Procédé de préparation de la composition selon la revendication 1 où on fait réagir un arylène substitué par un groupement hétérocyclique de structure : 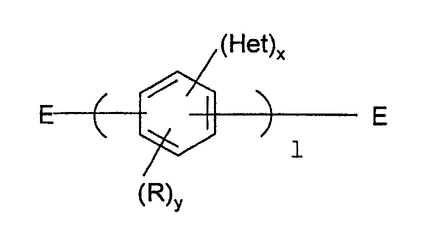 avec un monomère difonctionnel complémentaire E'-(Y)ₘ-E' où E et E' sont des groupes réactifs complémentaires.

32. Procédé selon la revendication 31 où E est choisi parmi le groupe constitué d'un chlorure d'acide, d'un alcool aminoarylique, d'une arylamine, d'un chlorure d'acide d'aryle, d'un acide aryl carboxylique, d'un fluorure d'aryle, d'un acide carboxylique, d'un époxyde, d'un fluorure, d'un hydroxyle, d'un isocyanate et d'un chlorure de silyle.

33. Procédé selon la revendication 31 où E' est choisi parmi le groupe constitué d'un chlorure d'acide, d'un amine, d'un alcool arylique, d'une arylamine, d'un chlorure acide d'aryle, d'un acide aryl carboxylique, d'un fluorure d'aryle, d'un acide carboxylique, d'un époxyde, d'un fluorure, d'un hydroxyle, d'un isocyanate et d'un chlorure de silyle.

34. Procédé selon la revendication 31 où E est choisi parmi le groupe constitué d'un fluorure d'aryle et d'un fluorure et E' est un anion d'alcool.

35. Procédé selon la revendication 31 où E est choisi parmi le groupe constitué d'un chlorure d'acide, d'un chlorure d'acide d'aryle, d'un acide aryl carboxylique, d'un acide carboxylique et E' est choisi parmi le groupe constitué d'un hydroxyle et d'une amine.

36. Procédé selon la revendication 31 où E est choisi parmi le groupe constitué d'une amine, d'un alcool arylique, d'une arylamine et d'un hydroxyle et E' est choisi parmi le groupe constitué d'un chlorure d'acide, d'un acide carboxylique, d'un époxyde, d'un isocyanate et d'un chlorure de silyle.

37. Procédé selon la revendication 31 où l est compris entre 2 et 200.

38. Procédé selon la revendication 31 où l est compris entre 1 et 10 et m est compris entre 1 et 10.

39. Polymère comprenant des motifs répétitifs de formule générale : 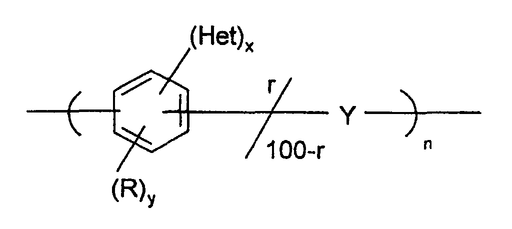 où r est au moins 1 ; et où :
jusqu'à trois unités CH dans chaque cycle aromatique peuvent être remplacées par des atomes d'azote ;
Het est un groupement hétérocyclique ;
x est 1 ou 2 ;
Y est inférieur ou égal à 4-x ;
R est indépendamment des groupements alkyle, aryle, alcoxy, aryloxy, cétone, aldéhyde, amide, ester, sulfone, cyano, fluoro et des groupements oligomères ou polymères comprenant un polyalcènoxy, polyarylènoxy, polyarylènesulfate, polyarylène sulfone, polyphénoxyphénylcétone, polystyrène, polyphénylène, polyamide et polyimide ;
Y est choisi parmi le groupe constitué de rien, -Ar-, -Z-, -Z-Ar- et de -Ar-Z-Ar-, où Z est un groupement divalent choisi parmi le groupe constitué de -O-, -S-, -NR'-, -O(CO)-, -(CO)N(CO)-, -NR'(CO)-, phtalimide, pyromellitimide, -CO-, -CH₂-, -CF₂- et de -CR'R''-, où R' et R'' sont indépendamment alkyle ou aryle et, ensemble, peuvent former un pont, et où Ar est choisi parmi le groupe constitué d'un arylène, d'un hétéroarylène d'un arylène et d'un hétéroarylène substitué par au moins un groupement R ; et
n est supérieur à 4.

40. Polymère selon la revendication 39 où r est au moins 10.

41. Polymère selon la revendication 39 où r est au moins 20.

42. Polymère selon la revendication 39 où Het est un groupement hétéroaromatique.

43. Polymère selon la revendication 39 où les groupements hétérocycliques latéraux sont choisi parmi le groupe constitué du benzimidazolyle, benzofuranyle, benzoxazolyle, benzothiazolyle, dioxolanyle, dithianyle, furanyle, imidazolyle, indolyle, isoquinolinyle, maléimidyle, morpholinyle, oxadiazolyle, oxazolyle, phtalimidyle, pipéridinyle, purinyle, pyranyle, pyrazinyle, pyridazinyle, pyridyle, pyrimidinyle, quinazolinyle, quinazolonyle, quinolinyle, quinolonyle, quinoxalinyle, succinimidyle, tétrahydrofuranyle, thiophényle et triazinyle.

44. Polymère selon la revendication 39 où le polymère comprend les motifs répétitifs :

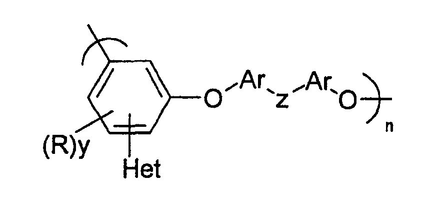

45. Polymère selon la revendication 39 où le polymère comprend les motifs répétitifs :

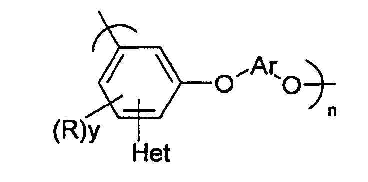

46. Polymère selon la revendication 43 où Y est substantiellement rien, x est 1 et y est 0.

47. Polymère selon la revendication 46 où Het est choisi parmi le groupe constitué du 2-benzimidazolyle, 2-benzoxazolyle, 2-benzothiazolyle, 2-quinolyle, et 4-phényle-2-quinolyle.

48. Polymère selon la revendication 46 où au moins 50 % des motifs arylène substituées hétérocycliques présentent un enchaînement en 1,4.

49. Polymère selon la revendication 39 où Y est choisi parmi le groupe constitué dU 5-amino-1,4-phénylène, 2-benzoyl-1,4-phénylène, 4-benzoyl-1,3-phénylène, 5-benzoyl-1,3-phénylène, 2-carboxyméthyl-1,4-phénylène, 4-carboxyméthyl-1,3-phénylène, 5-carboxyméthyl-1,3-phénylène, 2-phényl-1,4-phénylène, isophtaloyle, 1,4-phénylène, 1,3-phénylène, 1,2-phénylène, 3,5-pyridinediyle et téréphtaloyle.

50. Polymère selon la revendication 49 où Y est le 1,3-phénylène.

51. Polymère selon la revendication 50 où x est 1, y est 0 et Het est choisi parmi le groupe constitué du benzimidazole, benzofurane, benzoxazole, benzothiazole, dioxolane, dithiane, furane, imidazole, indole, isoquinoline, maléimide, morpholine, oxadiazole, oxazole, phtalimide, pipéridine, purine, pyrane, pyrazine, pyridazine, pyridine, pyrimidine, quinazoline, quinazolone, quinoline, quinolone, quinoxaline, succinimide, tétrahydrofurane, thiophène et triazine.

52. Polymère selon la revendication 50 où x est 1, y est 0 et Het est choisi parmi le groupe constitué du 2-benzimidazole, 2-benzoxazole, 2-benzthiazole, 2-quinolyle, et 4-phényle-2-quinolyle.

53. Polymère selon la revendication 39 où les groupements hétérocycliques sont au moins en partie répartis de manière aléatoire entre les positions possibles sur les cycles aromatiques.

54. Polymère selon la revendication 39 où au moins 5 % des groupements hétérocycliques sont en ortho par rapport au site d'enchaînement.

55. Polymère selon la revendication 39 où n est de 50 à 1.000.

56. Polymère selon la revendication 39 où Y est rien et n vaut jusqu'à 500.

57. Composition polymère comprenant le polymère de la revendication 39 et un acide.

58. Procédé de préparation de la composition selon la revendication 39 où on fait réagir un arylène substitué par un hétérocycle de structure : 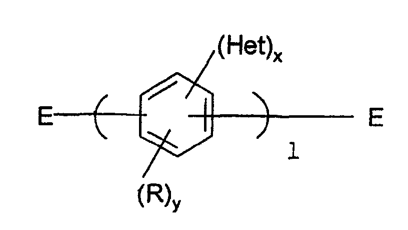 avec un monomère difonctionnel complémentaire E'-(Y)ₘ-E' où E et E' sont des groupes réactifs complémentaires.

59. Procédé selon la revendication 58 où l est 1.

60. Procédé selon la revendication 58 où l est entre 2 et 200.

61. Procédé selon la revendication 58 où l est entre 1 et 10 et m est entre 1 et 10.
